# NEUE EUROPÄISCHE PATENTSCHRIFT

(11) **EP 1 372 941 B3**
(45) Veröffentlichungstag dieser Patentschrift: **18.01.2012**
(45) Hinweis auf die Patenterteilung: 04.05.2005
(21) Anmeldenummer: 02722076.3
(22) Anmeldetag: 14.02.2002
(51) Int. Cl.: B29C 73/16, B60S 5/04, B60C 29/06

(54) **GERÄT ZUM ABDICHTEN UND AUFPUMPEN EINES AUFBLASBAREN OBJEKTS**
DEVICE FOR SEALING AND INFLATING AN INFLATABLE OBJECT
APPAREIL PERMETTANT D'ETANCHEIFIER ET DE GONFLER UN OBJET GONFLABLE

(30) Priorität: 16.02.2001 DK 200100271
(43) Veröffentlichungstag der Anmeldung: 02.01.2004
(73) Patentinhaber: Continental AG, 30001 Hannover (DE)
(72) Erfinder: ERIKSEN, Steen, Mandsfelt, DK-3230 Grasted (DK); OLRIK, Henrik-Gerner, DK-3050 Humlebak (DK); LODEMANN, Joachim, Georg, 25348 Glückstadt (DE)
(74) Vertreter: Finger, Karsten
(86) Internationale Anmeldenummer: PCT/EP2002/001554
(87) Internationale Veröffentlichungsnummer: WO 2002/066236

(56) Entgegenhaltungen:
- DE-A- 19 846 451
- DE-U- 29 716 453
- FR-A- 1 324 352
- US-A- 4 765 367

## Beschreibung

Die Erfindung betrifft ein Gerät zum Abdichten und Aufpumpen eines aufblasbaren Objekts, z.B. eines Reifens, das mit einem Aufpumpventil versehen und von einer solchen Art ist, die eine Druckgasquelle und einen Behälter mit einem Dichtmittel umfasst.

Reifen an Autos, Motorrädern und Fahrrädern sind nicht zuletzt beim Fahren der Gefahr ausgesetzt, von scharfen Gegenständen auf der Fahrbahn penetriert zu werden.

Wird ein Reifen eines Fahrrads undicht, so kann die unangenehme Situation entstehen, dass der Radfahrer nicht oder nur schwierig weiterfahren kann, weil es nicht möglich ist, den undicht gewordenen Reifen vor Ort zu flicken.

Um nicht in die gleiche ernste Situation zu geraten, sind Autos deshalb in der Regel mit einem Ersatzrad zum Wechseln eines undicht gewordenen Rads ausgerüstet. Viele Autofahrer sind jedoch außerstande, einen solchen Wechsel selbst vorzunehmen, und andere finden die Arbeit beschwerlich und unangenehm.

Das Vorhandensein eines Ersatzrads, das der Autofahrer somit ständig mitführen muss, stellt ferner ein bedeutendes Problem an sich dar, da das Ersatzrad die Nutzlast des Autos vermindert und anderweitig nutzbaren Platz in Anspruch nimmt.

Im Hinblick auf eine Beseitigung obengenannter Probleme wurden deshalb im Laufe der Zeit Geräte entwickelt, die für eine einfache und erschwingliche Reparatur eines undicht gewordenen Reifens vorgesehen sind.

Die Hauptbestandteile dieser Geräte sind eine Druckgasquelle, z.B. ein Kompressor, und ein Behälter mit einem Dichtmittel, das beispielsweise eine Latexdispersion sein kann.

Aus der DE 195 45 935 C2 ist ein solches Gerät bekannt, das einen Kompressor oder eine Flasche mit einem unter Druck gesetzten Treibgas als Druckquelle verwendet. Die Druckquelle ist mit dem Behälter verbunden, der im Gebrauchsfall über einen Schlauch mit dem Ventil des undicht gewordenen Reifens verbunden wird. Dabei wird das Dichtmittel in den Reifen getrieben, der nachfolgend auf den vorgeschriebenen Druck aufgepumpt wird. Das Gerät ist einfach, dafür aber beschwerlich im Gebrauch.

Eine bessere Lösung ist aus der DE 297 16 453 U1 bekannt, die ein integriertes Gerät beschreibt, das einen in einer Druckkammer untergebrachten flexiblen Behälter aufweist, welche Kammer im Gebrauchsfall von einem Kompressor unter Gasdruck gesetzt werden kann. Das Gerät weist eine erste Bruchstelle über dem Behälter und eine zweite Bruchstelle in einer direkten Verbindung zwischen dem Kompressor und dem abzudichtenden und aufzupumpenden Reifen auf.

Bei Gebrauch setzt der Kompressor die Druckkammer unter Druck. Der Druck pflanzt sich auf das Dichtmittel in dem flexiblen Behälter fort. Dabei sprengt das Dichtmittel die erste Bruchstelle und wird jetzt über die gebildete Öffnung in den undicht gewordenen Reifen getrieben. Wenn der Behälter leer ist, wird die zweite Bruchstelle gesprengt, wobei der Reifen aufgepumpt wird.

Diesem Gerät haftet der Nachteil an, dass seine Verwendung durch die Fähigkeit der beiden Bruchstellen zur Widerstehung einer bestimmten Belastung beschränkt ist, und es ist deshalb nicht universell verwendbar.

Aus der US 4,765,367 ist ein anderes Gerät zum Abdichten und Aufpumpen eines undicht gewordenen Reifens bekannt. Der Behälter ist in diesem Fall ein Aerosolbehälter mit z.B. Latex, und das Gerät ist mit einem Umschaltventil versehen, das in zwei Positionen gestellt werden kann. In einer Stellung wird eine Verbindung zwischen dem undicht gewordenen Reifen und dem Aerosolbehälter geöffnet, der dabei seinen Inhalt an Dichtmittel in den Reifen entleert. In einer anderen Stellung wird eine Verbindung zwischen dem Reifen und dem Kompressor geöffnet, der jetzt den Reifen aufpumpen kann. Der Reifen muss jedoch mühsam von Restluft entlastet werden, bevor das Dichtmittel sich in den Reifen treiben lässt, und dieses Gerät ist deshalb auch beschwerlich im Gebrauch.

Den obigen Geräten ist gemein, dass ihre Verwendung darauf beschränkt ist, dass sie nur zum Aufpumpen eines Reifens bei gleichzeitigem Füllen des Reifens mit einem Dichtmittel verwendet werden können.

Der Erfindung liegt die Aufgabe zugrunde, ein Gerät der eingangs genannten Art zu schaffen, das sich leicht und mühelos zum Abdichten und Aufpumpen eines undicht gewordenen Objekts verwenden lässt.

Der Erfindung liegt die zweite Aufgabe zugrunde, ein Gerät der eingangs genannten Art zu schaffen, das für das Aufpumpen eines Objekts auf den vorgeschriebenen Druck vorgesehen ist.

Der Erfindung liegt die dritte Aufgabe zugrunde, ein Gerät der eingangs genannten Art zu schaffen, das zwischen einer Funktion, bei der das Gerät für das Aufpumpen eines Objekts, das Luft verloren hat, geeignet ist und einer zweiten Funktion, bei der das Gerät für das Abdichten und Aufpumpen eines undicht gewordenen Objekts geeignet ist, wechseln kann.

Das Neuartige und Besondere nach der Erfindung, wodurch diese Aufgabe gelöst wird, liegt in den Merkmalen des kennzeichnenden Teils des Anspruchs 1.

In der ersten Position kann der Benutzer das Gerät beispielsweise zum Aufpumpen eines Reifens verwenden, der lediglich Luft verloren hat. Ein Autofahrer, der mit dem erfindungsgemäßen Gerät fährt, wird deshalb immer über ein wirksames Mittel zur Sicherung dessen verfügen, dass die Reifen den für gerade diesen Reifentyp vorgeschriebenen Druck halten. Dadurch wird der Vorteil erzielt, dass das Auto immer sicher und bei bestmöglicher Wirtschaftlichkeit fährt.

Durch das einfache Umschalten des Ventils in die zweite Position kann der Benutzer jetzt das gleiche Gerät zum schnellen und einfachen Abdichten und Aufpumpen von beispielsweise einem undicht gewordenen Reifen verwenden. Die Druckgasquelle leitet bei Gebrauch Druckgas in den Behälter mit Dichtmittel, das dabei in den undicht gewordenen Reifen getrieben wird. Danach strömt das Druckgas über den Behälter weiterhin unmittelbar in den Reifen, bis die Verbindung mit der Druckgasquelle abgebrochen wird, wenn der Reifen auf den vorgeschriebenen Druck aufgepumpt worden ist. Dieser Vorgang erfordert keinen Gebrauch von Aerosolbehältern oder Bruchstellen, die die Verwendung der obengenannten bekannten Geräte beschränken.

DerAutofahrerkann wirksam sichern, dass die Reifenpanne versiegelt wird, indem er gleich nach dem obigen Vorgang eine Strecke fährt, so dass das Dichtmittel sich überall an der inneren Oberfläche des Reifens verteilt.

Bei einer vorgezogenen Ausführungsform kann das Umschaltventil ein Drehventil mit einander gegenüberliegenden Gleitflächen an einem ersten und zweiten Ventilteil mit einem ersten und zweiten Satz Kanälen sein, die in einer ersten gegenseitigen Winkelposition derbeiden Ventilteilefürdie Bildung einer Öffnung durch das Ventil in der ersten Verbindung und in einer zweiten Winkelposition für die Bildung einer Öffnung durch das Ventil in der zweiten Verbindung vorgesehen sind, indem die Kanäle in einer solchen Weise in die Gleitflächen ausmünden, dass zusammengehörige Kanäle in den beiden gegenseitigen Winkelpositionen der Ventilteile kommunizieren.

Spezifischer ausgedrückt können in dem ersten Ventilteil ein erster und zweiter Kanal und in dem zweiten Ventilteil ein dritter, vierter und fünfter Kanal ausgebildet sein, wobei der erste, zweite und dritte Kanal eine Öffnung durch das Ventil in der ersten Verbindung bilden, während der erste, zweite, vierte und fünfte Kanal eine Öffnung durch das Ventil in der zweiten Verbindung bilden.

Bei einer einfachen und zweckmäßigen Ausführungsform können jedes Ventilteil scheibenförmig und der erste, zweite, vierte und fünfte Kanal Querkanäle sein, die sich quer durch ihre jeweiligen Ventilteile erstrecken, während derdritte Kanal sich zwischen zwei Ausmündungen in der Gleitfläche des zweiten Ventilteils erstreckt.

Ein neuer Behälter, der mit Dichtmittel gefüllt ist, kann vorteilhaft mit einer Versiegelung versehen sein, um zu sichern, dass das Dichtmittel seine Konsistenz bewahrt, bis es zum Abdichten eines undicht gewordenen Objekts verwendet werden soll und die Versiegelung deshalb gebrochen werden muss.

Zu diesem Zweck kann das Gerät mit einem Kolben in einem Pneumatikzylinder versehen sein, der an einem offenen Ende in einer solchen Weise mit dem Behälter verbunden ist, dass die Versiegelung die Öffnung abdeckt, während der Zylinder durch eine Trennwand in eine erste Kammer an der Versiegelung und eine zweite Kammer auf der anderen Seite der Trennwand aufgeteilt ist, indem die erste Kammer dann mit dem fünften Kanal des zweiten Ventils und die zweite Kammer mit seinem vierten Kanal in Verbindung stehen können.

Wenn das Umschaltventil in die zweite Position gestellt wird, füllt sich jetzt bei Gebrauch die zweite Kammer über ihren ersten und vierten Kanal mit Druckgas, das den Kolben durch die Versiegelung des Behälters schießt, die dadurch gebrochen wird. Das Druckgas kann danach über einen axialen Kanal im Kolben in den Behälter strömen und über die erste Kammer des Zylinders und den zweiten und fünften Kanal das Dichtmittel in die Verbindung des Ventils mit dem Objekt treiben. Wenn der Behälter leer ist, strömt das Druckgas weiter über den Behälter in das Objekt, das dadurch aufgepumpt wird.

Der Kolben weist hierzu zweckmäßigerweise Führungseinrichtungen auf, die ihn an den Innenwänden des Pneumatikzylinders zentrieren und führen. Diese sind vorzugsweise und einer Leichtbauweise entsprechend als in Längsrichtung des Kolbens sich erstreckende Stege ausgebildet.

Die Führung und die Gesamtfunktion des im Pneumatikzylinder somit bewegbaren Kolbens wird dadurch verbessert, dass der Kolben an seiner Unterseite einen nach unten vorspringenden Zapfen aufweist, der wiederum in einer am Zylinderboden befindlichen Hülse geführt wird.

Darüber hinaus weist der Kolben einen axialen Durchströmungskanal auf, der mit einem Rückschlagventil versehen ist. Bohrungen im unteren Bereich des Zapfens verbinden die zunächst druckbeaufschlagte zweite Kammer mit dem Durchströmungskanal und schaffen damit einen Durchgang des Druckmediums in den Behälter.

Der Kolben fährt hierso weit in seine obere Position, bei der die Versiegelung des Behälters durchsto-βen wird, bis die Bohrungen freigegeben werden, aber der Zapfen noch in der am Boden des Pneumatikzylinders befindlichen Hülse geführt wird.

Wenn der Kolben ferner mit einer der Versiegelung zugekehrten Perforiervorrichtung in Form von beispielsweise mindestens einem Messer und/oder einer Spitze versehen ist, wird eine sichere und wirksame Durchbrechung der Versiegelung des Behälters erzielt, wenn ein undicht gewordenes Objekt mit dem Dichtmittel im Behälter abgedichtet und nachfolgend aufgepumpt werden soll.

Ferner kann der Zylinder über ein Zwischenstück mit Kanälen, die eine Verlängerung des vierten und fünften Kanals darstellen, mit dem zweiten Ventilteil lösbar verbunden sein. Dadurch wird eine einfache Verbindung zwischen dem Pneumatikzylinder und dem zweiten Teil des Umschaltventils erzielt.

Wenn das Gerät zum Abdichten und Aufpumpen eines undicht gewordenen Objekts verwendet worden ist, werden in Zwischenstück und Zylinder in grö-βerem oder kleinerem Ausmaß Reste des Dichtmittels vorhanden sein, die sich deshalb gemeinsam mit dem Zylinder leicht entfernen und durch neue Teile ersetzen lassen, so dass das Gerät wieder einsatzbereit ist.

Reste des Dichtmittels können auch in dem zweiten Kanal des ersten Ventilteils vorhanden sein, welcher Kanal deshalb in einem Einsatz ausgebildet sein kann, der in dem Ventilteil lösbar montiert ist und deshalb durch einen neuen ersetzt werden kann.

Bei einer besonders zweckmäßigen Ausführungsform kann die Druckgasquelle in einem ersten Gehäuse eingebaut sein, während der Behälter in einem zweiten Gehäuse eingebaut sein kann, das über das Umschaltventil mit dem ersten Gehäuse verbunden ist, so dass das Ventil sich lediglich durch das Drehen der beiden Gehäuse zueinander leicht bedienen lässt.

Die Gehäuse können so vorgesehen sein, dass sie hauptsächlich fluchten, wenn das Gerät zum Aufpumpen von beispielsweise einem Reifen, der Luft verloren hat, verwendet werden soll, und beispielsweise 90° winklig zueinander gedreht sein, wenn das Gerät zum Abdichten und Aufpumpen eines undicht gewordenen Reifens verwendet werden soll.

Im letzteren Fall kann das erste Gehäuse auf einer Unterlage aufliegen, z.B. dem Boden, und das zweite Gehäuse mit dem Behälter aufrechtstehen, so dass das Dichtmittel vorteilhaft aus dem Behälter laufen kann, wenn die Versiegelung durchbrochen worden ist.

Im folgenden wird die Erfindung näher erläutert, indem Ausführungsformen lediglich beispielsweise beschrieben und weitere vorteilhafte Eigenschaften und technische Wirkungen des erfindungsgemäßen Gerätes unter Bezugnahme auf die Zeichnung angegeben werden, wobei
Fig. 1 in schematischer Darstellung ein erfindungsgemäßes Gerät in der Funktion als Pumpe zeigt,
Fig. 2 das Gerät zeigt, aber in der Funktion des Abdichtens und Aufpumpens eines undicht gewordenen Reifens,
Fig. 3 in einem größeren Maßstab, in perspektivischer Ansicht, ein Umschaltventil zeigt für das in Fig. 1 und 2 in zerlegtem Zustand gezeigte Gerät,
Fig. 4 im Axialschnitt das Gerät in zusammengebautem Zustand zeigt,
Fig. 5 in schematischer Darstellung das in Fig. 1 und 2 gezeigte Gerät mit dem in Fig. 3 und 4 gezeigten, in eine Position gestellten Umschaltventil zeigt, in der das Gerät allein als Pumpe funktionieren kann,
Fig. 6 das Gerät in Endansicht zeigt,
Fig. 7 das in Fig. 5 und 6 gezeigte Gerät zeigt, wobei aber das Umschaltventil in eine Position gestellt ist, in der das Gerät zum Abdichten und Aufpumpen eines undicht gewordenen Reifens verwendet werden kann,
Fig. 8 das Gerät in Endansicht zeigt,
Fig. 9 ein Teil des in Fig. 1 bis 8 gezeigten Gerätes in der Funktion als Pumpe zeigt,
Fig. 10 das Gerät zeigt, wobei aber das Umschaltventil in eine Position gestellt ist, in der das Gerät in der Funktion des Abdichtens und Aufpumpens des in Fig. 1 bis 2 gezeigten Reifens arbeitet und sich dabei auf einer ersten Vorgangsstufe befindet,
Fig. 11 das Gerät auf einer zweiten Vorgangsstufe zeigt,
Fig. 12 das Gerät auf einer dritten Vorgangsstufe zeigt,
Fig. 13 einen Teil des Gerätes mit einer geänderte Ausgestaltung für den Pneumatikzylinder und Kolben zeigt, und sich dabei auf einer ersten Vorgangsstufe mit dem Umschaltventil in seiner zweiten Position befindet,
Fig. 14 das in Fig. 13 gezeigte Gerät auf einer zweiten Vorgangsstufe zeigt,
Fig. 15 das in Fig. 13 gezeigte Gerät auf einer dritten Vorgangsstufe zeigt,
Fig. 16 in perspektivischer Ansicht eine andere Ausgestaltung des Umschaltventils in zerlegtem Zustand zeigt,
Fig. 17 das in Fig. 15 gezeigte Umschaltventil in zusammengebautem Zustand in Endansicht mit dem Umschaltventil in seiner ersten Position zeigt,
Fig. 18 das in Fig. 15 gezeigte Umschaltventil in zusammengebautem Zustand in Endansicht mit dem Umschaltventil in seiner zweiten Position zeigt,
Fig. 19 das in Fig. 17 gezeigte Umschaltventil mit dem Umschaltventil in seiner ersten Position im Querschnitt zeigt,
Fig. 20 das in Fig. 18 gezeigte Umschaltventil mit dem Umschaltventil in seiner ersten Position im Querschnitt zeigt, und
Fig. 21 einen Schnitt entlang der Linie XXI - XXI in Fig. 19 zeigt.

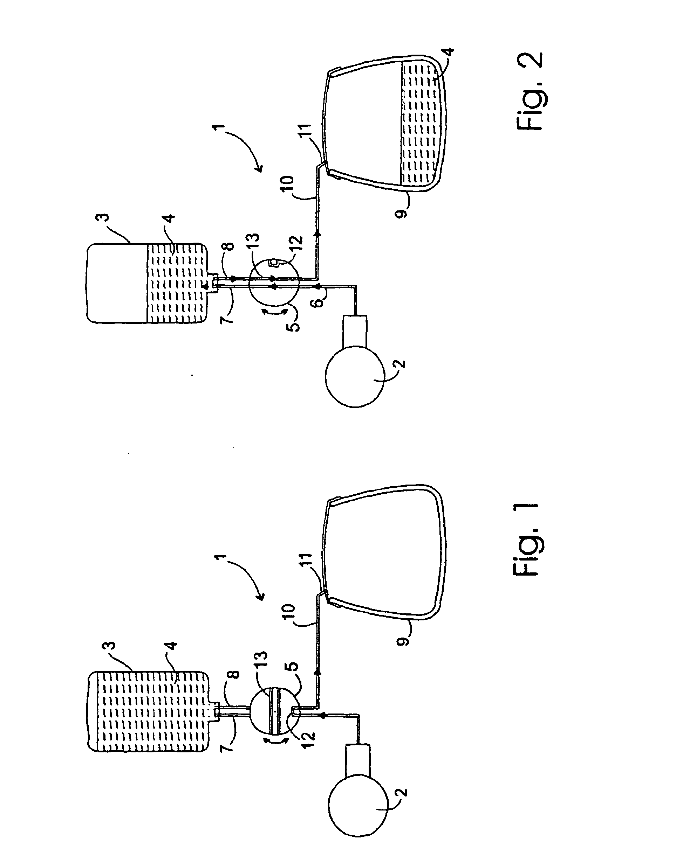

Fig. 1 und 2 zeigen den grundsätzlichen Aufbau eines erfindungsgemäßen Gerätes 1. In Fig. 1 wird das Gerät zum Aufpumpen eines Reifens, der Luft verloren hat, und in Fig. 2 zum Abdichten und Aufpumpen eines undicht gewordenen Reifens verwendet. In diesem Fall wird angenommen, dass der Reifen ein Autoreifen ist.

Die Hauptbauteile des Gerätes sind eine Druckgasquelle 2, von der im gezeigten Beispiel angenommen wird, dass sie ein Kompressor 2 ist, ein Behälter 3 mit einem Dichtmittel 4, z.B. eine Latexdispersion, und ein Umschaltventil 5, das über eine erste Leitung 6 mit dem Kompressor 2, über eine zweite und dritte Leitung 7 und 8 mit dem Behälter 3 und über eine vierte Leitung 10 mit einem Reifen 9 verbunden ist, welche Leitung an ein am Reifen 9 befindliches Aufpumpventil 11 lösbar angeschlossen ist. Im Umschaltventil 5 sind ferner ein erster Satz Kanäle 12 und ein zweiter Satz Kanäle 13 ausgebildet.

Das in Fig. 1 und 2 rein schematisch gezeigte Umschaltventil 5 kann im Rahmen der Erfindung an und für sich eines beliebigen Typs sein, es wird jedoch hier angenommen, dass es ein Drehventil ist, das wie durch den Pfeil angedeutet zwischen der in Fig. 1 gezeigten ersten Position und der in Fig. 2 gezeigten zweiten Position gedreht werden kann.

Wenn das Umschaltventil 5 in der ersten Position steht, ist der Reifen 9, wie in Fig. 1 gezeigt, über die erste Leitung 6, den ersten Satz Kanäle 12 des Umschaltventils 5 und die vierte Leitung 10 mit dem Kompressor 2 verbunden. In dieser Position wird das Gerät zum Aufpumpen des Reifens auf einen gewünschten Druck verwendet, wenn er Luft verloren hat.

Wenn das Umschaltventil in der zweiten Position steht, ist der Kompressor 2, wie in Fig. 2 gezeigt, über die erste Leitung 6, den zweiten Satz Kanäle 13 und die zweite Leitung 7 mit dem Behälter 3 verbunden, während der Behälter 3 über die dritte Leitung 8, den zweiten Satz Kanäle 13, die vierte Leitung 10 und das Aufpumpventil 11 des Reifens mit dem Reifen 9 verbunden ist.

In dieser Position wird das Gerät im Falle einer Reifenpanne zum Abdichten und Aufpumpen des Reifens 9 verwendet, indem die vom Kompressor erzeugte Druckluft über die zweite Leitung 7 in den Behälter 3 strömt und das darin befindliche Dichtmittel über die dritte Leitung 8, die vierte Leitung 10 und das Aufpumpventil 11 in den Reifen 9 treibt.

Wenn der Behälter 3 leer ist, leitet der Kompressor über den jetzt leeren Behälter 3 Druckluft direkt in den Reifen 9. Dadurch wird der Reifen auf den gewünschten Druck aufgepumpt.

Nachfolgend kann der Autofahrer mit Vorteil eine angemessene Strecke mit dem Auto fahren, um das Dichtmittel über die ganze Innenseite des Reifens zu verteilen und dadurch zu sichern, dass das Dichtmittel zum Loch oder den Löchern im undicht gewordenen Reifen gelangt und es/sie abdichtet.

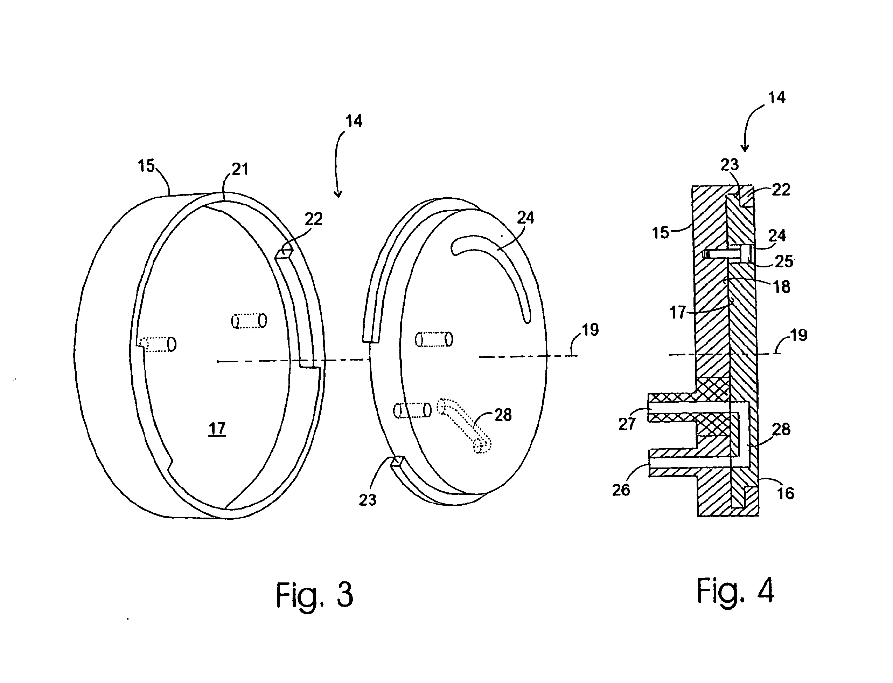

Fig. 3 zeigt in zerlegtem Zustand, in perspektivischer Darstellung, eine zweckmäßige Ausführungsform eines erfindungsgemäßen Drehventils 14, und Fig. 4 zeigt im Axialschnitt dieses Drehventil in zusammengebautem Zustand.

Das Drehventil 14 besteht aus einem ersten Ventilteil 15 und einem zweiten Ventilteil 16. Die beiden Ventilteile 15 und 16 sind beide hauptsächlich scheibenförmig undje mit einer Gleitfläche versehen, 17 bzw. 18. Die beiden Ventilteile 15 und 16 des Drehventils 14 können mit ihren Gleitflächen 17 und 18 in gegenseitiger gleitender Berührung um eine Drehachse 19, z.B. 90° winklig zueinander, gedreht werden.

An dem ersten Ventilteil 15 ist ein ringförmiger Bund 21 ausgebildet, der sich von der Gleitfläche 17 7 nach aussen hin erstreckt. An dem Bund 21 sind ferner zwei einander gegenüberliegende Vorsprünge 22 ausgebildet, die sich nach innen auf die Drehachse 19 hin erstrecken.

An dem zweiten Ventilteil 16 sind zwei einander gegenüberliegende Vorsprünge 23 ausgebildet, die sich von der Drehachse 19 nach außen hin erstrecken.

Die nach außen gekehrten vorsprünge 23 verlaufen an einem Kreis eines Durchmessers entlang, der dem Innendurchmesser des Bunds 21 des ersten Ventilteils 15 entspricht oder diesen etwas unterschreitet, und sie haben eine axiale Ausstreckung, die dem axialen Abstand zwischen den nach innen gekehrten Vorsprüngen 22 und der ersten Gleitfläche 17 des ersten Ventilteils 15 entspricht oder ihn etwas unterschreitet.

Jeder Vorsprung 23 erstreckt sich ferner über eine Bogenlänge, die der Bogenlänge zwischen den beiden nach innen gekehrten Vorsprüngen 22 des ersten Ventilteils 15 entspricht oder sie etwas unterschreitet.

Der Zusammenbau der beiden Ventilteile erfolgt jetzt durch das axiale Verschieben der beiden Vorsprünge 22 und 23 aneinander vorbei und das nachfolgende gegenseitige Drehen der Ventilteile, so dass der nach außen gekehrte Vorsprung 23 des zweiten Ventilteils 16 hinter den nach innen gekehrten Vorsprung 22 des ersten Ventilteils 15 geführt wird.

Die Vorsprünge 22 und 23 erstrecken sich über solche Bogenlängen, dass sie immer mit einander eingreifen, wenn die beiden Ventilteile 15 und 16 des Drehventils 14 zwischen der ersten und zweiten Position gegenseitig gedreht werden.

Der Winkel zwischen der ersten und der zweiten Position kann vorteilhaft zwischen 10° und 170°, vorzugsweise zwischen 30° und 140° und insbesondere zwischen 80° und 100° betragen. Der winkel wird von Anschlägen festgelegt, die aus einem Zapfen oder einer Schraube 25 bestehen, die an dem ersten Ventilteil 15 ausgebildet ist und sich in oder durch einen kreisförmig verlaufenden Schlitz 24 des zweiten Ventilteils 16 erstreckt. Im gezeigten Beispiel beträgt der Winkel 90°.

Der Zapfen kann natürlich auch als federbeaufschlagter Zapfen in einem ersten Ventilteil ausgebildet sein, der beim Zusammenbau der Ventilteile gegen die Federkraft verschoben wird, wonach die Ventilteile zusammengesteckt und die Vorsprünge 22 und 33 zum Eingriff kommen können. Der federbeaufschlagte Zapfen rastet dann in den teilkreisförmig verlaufenden Schlitz ein, sobald er diesen erreicht.

Zur sicheren Führung beim Zusammenbau kann beispielsweise eines der Ventilteile mit einem zusätzlichen Mittelzapfen zur Zentrierung und das andere mit einer komplementären Aufnahme für einen solchen Zapfen versehen sein.

Im Drehventil 14 sind Kanäle ausgebildet, die in der ersten Position für die Öffnung der in Fig. 1 gezeigten ersten Verbindung zwischen dem Kompressor 2 und dem Reifen 9 und in der zweiten Position für die Öffnung der in Fig. 2 gezeigten Verbindung zwischen dem Kompressor 2 und dem Reifen 9 über den Behälter 3 vorgesehen sind.

Zu diesem Zweck sind in dem ersten Ventilteil 15 ein erster und zweiter Kanal 26 und 27 und in dem zweiten Ventilteil 16 ein dritter, vierter und fünfter Kanal 28, 29 und 30 ausgebildet. Die Kanäle 26, 27 und 29, 30 erstrecken sich quer durch ihre jeweiligen Ventilteile 15 und 16, während der dritte Kanal 28 in dem zweiten Ventilteil 16 verläuft und an zwei Stellen in dessen Gleitfläche 18 ausmündet. Die Stellung der Kanäle zueinander in den beiden Positionen des Ventils und die dadurch erzielte Betriebsweise des Gerätes wird nachfolgend näher beschrieben werden.

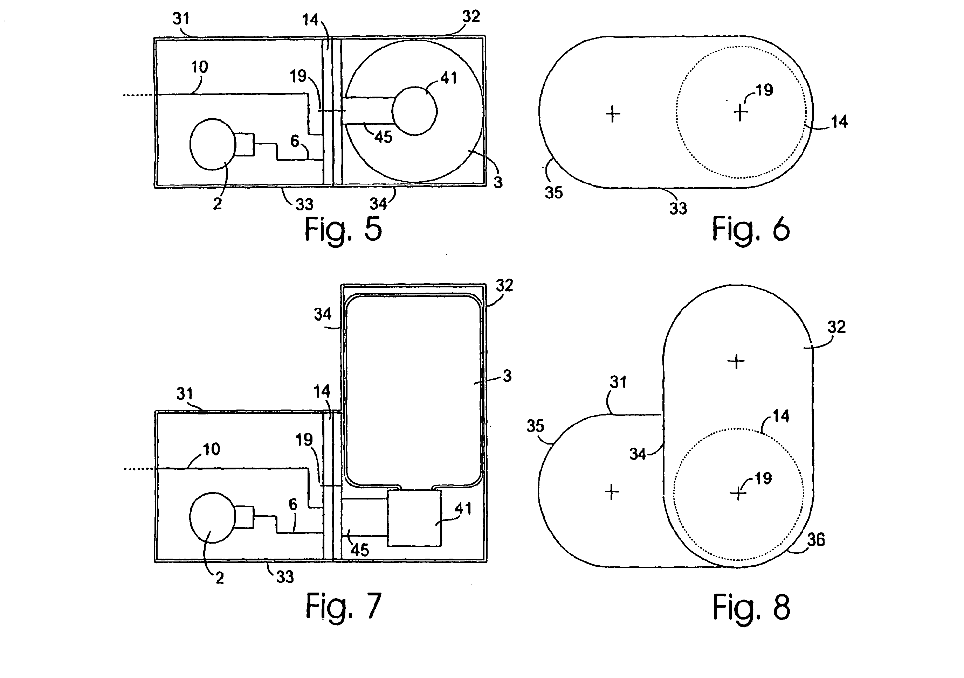

Fig. 5 bis 8 zeigen, teilweise im Schnitt, eine vorteilhafte Ausführungsform des erfindungsgemäßen Gerätes 1. In diesem Fall weist das Gerät ein erstes Gehäuse 31 mit dem Kompressor 2 und ein zweites Gehäuse 32 mit dem Behälter 3 auf. Das erste Gehäuse 31 ist mit dem ersten Ventilteil 15 des Drehventils 14 und das zweite Gehäuse 32 mit dem zweiten Ventilteil 16 fest verbunden. Das Drehventil 14 bildet somit ein Scharnier zwischen den beiden Gehäusen 31 und 32, die dadurch um die Drehachse 19 des Drehventils, in diesem Fall 90°, winklig zueinander drehen können.

Dadurch, dass die beiden Gehäuse 31 und 32 ganz einfach 90° zueinander gedreht werden, wechselt das Gerät somit zwischen der in Fig. 1 gezeigten Funktionsweise als Pumpe und der in Fig. 2 gezeigten Funktionsweise, bei der das Gerät sich bequem zum Abdichten und nachfolgenden Aufpumpen eines undicht gewordenen Reifens verwenden lässt.

Die beiden Gehäuse 31 und 32 haben, im Querschnitt, hauptsächlich die gleiche Konfiguration. In Fig. 5 und 6 steht das Drehventil 14 in der ersten Position, und die Gehäuse erstrecken sich in Verlängerung voneinander in die gleiche Richtung wie die Drehachse 19 des Drehventils mit zwei einander gegenüberliegenden, hauptsächlich ebenen, parallelen Seiten, 33 bzw. 34, und zwei einander gegenüberliegenden, zylinderflächenförmigen Querseiten, 35 bzw. 36, die eine der Drehachse 19 des Drehventils entsprechende Achse aufweisen.

In dieser Stellung wird das Gerät als Pumpe zum Aufpumpen eines Reifens 9, der Luft verloren hat, auf den gewünschten Druck verwendet. Dabei kann das Gerät mit der einen der ebenen Seiten der beiden Gehäuse, 33 bzw. 34, bequem auf einer Unterlage, z.B. dem Boden (nicht gezeigt), aufstützen.

In der in Fig. 7 und 8 gezeigten Stellung sind die beiden Gehäuse 31 und 32 jetzt 90° zueinander gedreht, und das Drehventil 14 steht dann in der zweiten Position, in der das Gerät darauf umgestellt ist, zum Abdichten und Aufpumpen eines undicht gewordenen Reifens verwendet werden zu können.

Während eines solchen Vorgangs kann das Gerät mit der einen der ebenen Seiten 33 des ersten Gehäuses 31 und der einen der zylinderflächenförmigen Querseiten 36 des zweiten Gehäuses 32 auf einer Unterlage, z.B. dem Boden (nicht gezeigt) aufstützen, welche Querseiten dabei der angrenzenden zylinderflächenförmigen Querseite 35 des ersten Gehäuses 31 folgen, so dass beide Gehäuse 31 und 32 auf der Unterlage (nicht gezeigt) sicher aufstützen.

Wie zu ersehen ist, steht der Behälter in der in Fig. 7 und 8 gezeigten Gebrauchsstellung aufrecht, wodurch der Vorteil erzielt wird, dass das Dichtmittel leicht aus dem Behälter laufen kann.

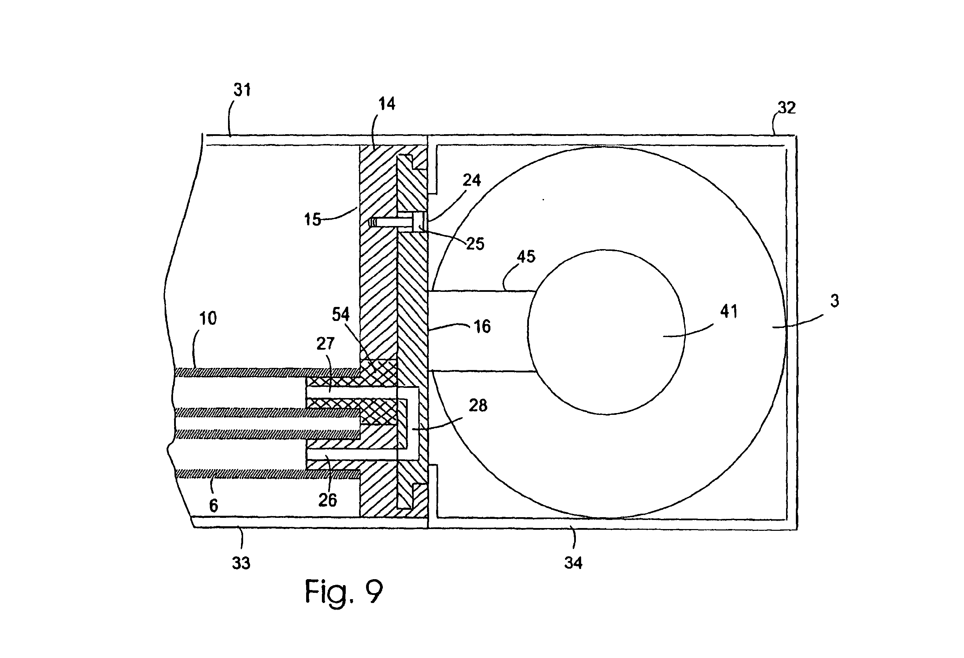

Fig. 9 zeigt teilweise und detaillierter das Gerät 1 mit dem Drehventil 14 in der ersten Position, in der das Gerät, wie in Fig. 5 und 6 gezeigt, allein als Pumpe zum Aufpumpen eines Reifens, der Luft verloren hat, verwendet wird.

Die erste mit dem Kompressor 2 verbundene Leitung 6 ist an den ersten Kanal 26 des ersten Ventilteils 15 angeschlossen, während die vierte mit dem Reifen 9 verbundene Leitung 10 an den zweiten Kanal 27 angeschlossen ist. Die Kanäle 26 und 27 kommunizieren in der gezeigten ersten Ventilposition gegenseitig über den dritten Kanal 28 des zweiten Ventilteils 16. Bei Gebrauch wird dabei aus dem Kompressor in die Richtung der Pfeile über die erste Leitung 6, den ersten Kanal 26, den dritten Kanal 28, den zweiten Kanal 27 und die vierte Leitung 10 Druckluft in den in der Figur nicht gezeigten Reifen getrieben, der dadurch aufgepumpt wird.

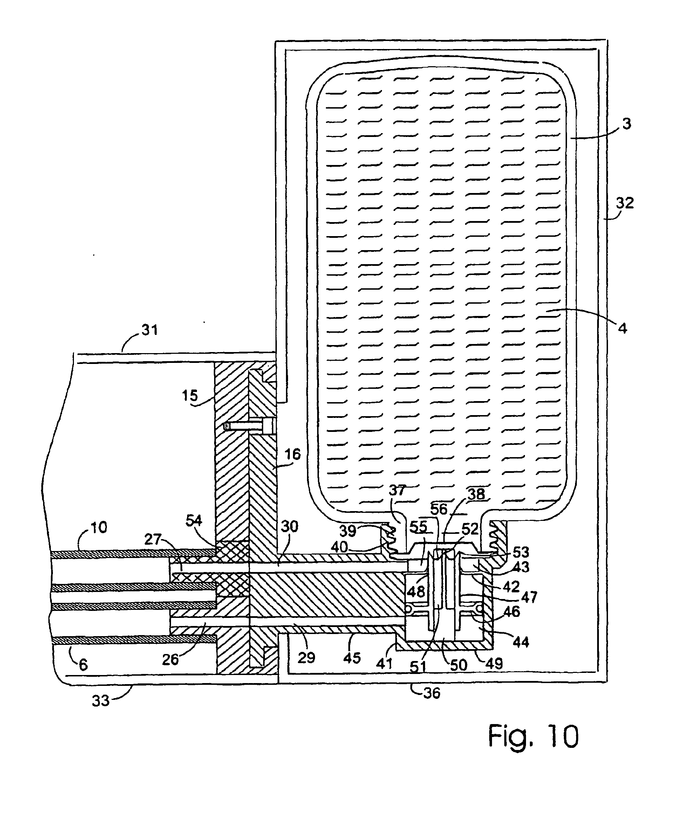

In Fig. 10, 11 und 12 sind die beiden Gehäuse 31 und 32 90° winklig zueinander gedreht, so dass das Drehventil 14 jetzt in der zweiten Position steht, in der das Gerät sich zum Abdichten und Aufpumpen eines undicht gewordenen Reifens verwenden lässt.

Während eines solchen Vorgangs ist das Gerät in der in Fig. 7 und 8 gezeigten Weise angeordnet, wobei der Behälter 3 sich vorteilhaft in einer aufrechten Stellung befindet, bei der das Dichtmittel 4 leicht aus dem Behälter laufen kann.

Der Behälter 3 ist, in diesem Fall, als eine Flasche mit einem Hals 37 ausgebildet, der mit einer Versiegelung 38 verschlos-. sen ist. Der Hals ist mit einem Außengewinde 39 eng in ein Innengewinde 40 eines Pneumatikzylinders 41 geschraubt, der durch eine Trennwand 42 in eine obere und untere Kammer 43 und 44 aufgeteilt ist.

Der Pneumatikzylinder 41 ist über ein Zwischenstück 45 an dem zweiten Ventilteil 16 des Drehventils 14 befestigt, dessen vierter Kanal 29 mit der unteren Kammer 44 des Pneumatikzylinders 41 verbunden ist, und dessen fünfter Kanal 30 mit der oberen Kammer 43 des Pneumatikzylinders 41 verbunden ist.

In dem Pneumatikzylinder 41 ist ein Kolben 46 verschiebbar angeordnet, der sich mit einem rohrförmigen Mittelteil47 eng durch eine Öffnung 48 in derTrennwand 42 erstreckt.

Unten ist der Pneumatikzylinder 41 mit einem Boden 49 geschlossen, der mit einem sich nach oben in einen Durchströmungskanal 56 des Kolbens 46 erstreckenden Zapfen 50 versehen ist. An einem ersten Stück schließt der Zapfen eng an der Innenseite des rohrförmigen Mittelteils an, während er an dem nachfolgenden Stück mit Längsrillen 51 ausgebildet ist. Oben ist der Kolben als eine Perforiervorrichtung 52 mit Messern oder Spitzen 53 ausgebildet, die auf die Versiegelung 38 der Flasche gerichtet sind.

In der in Fig. 10, 11 und 12 gezeigten zweiten Position des Drehventils 14 kommuniziert der erste Kanal 26 des ersten Ventilteils mit dem vierten Kanal 29 des zweiten Ventilteils und dadurch mit der unteren Kammer 44 des Pneumatikzylinders 41, während der zweite Kanal 27 des ersten Ventilteils mit dem fünften Kanal 30 des zweiten Ventilteils und dadurch mit der oberen Kammer 43 des Pneumatikzylinders 41 kommuniziert.

Da der erste Kanal 26 des ersten Ventilteils über die Leitung 6 mit dem Kompressor 2 verbunden ist, strömt, wie von den Pfeilen gezeigt, bei Gebrauch Druckluft in die untere Kammer 44 des Pneumatikzylinders 41, wobei über der Trennwand 42 ein Differenzdruck gebildet wird, der mit einer aufwärts gerichteten Kraft auf den Kolben 46 einwirkt.

Diese Kraft treibt den Kolben 46 aufwärts, wobei seine Perforiervorrichtung 52 die Versiegelung 38 der Flasche durchbricht und der Kolben 45 die Längsrillen 51 des Zapfens 49 entblößt.

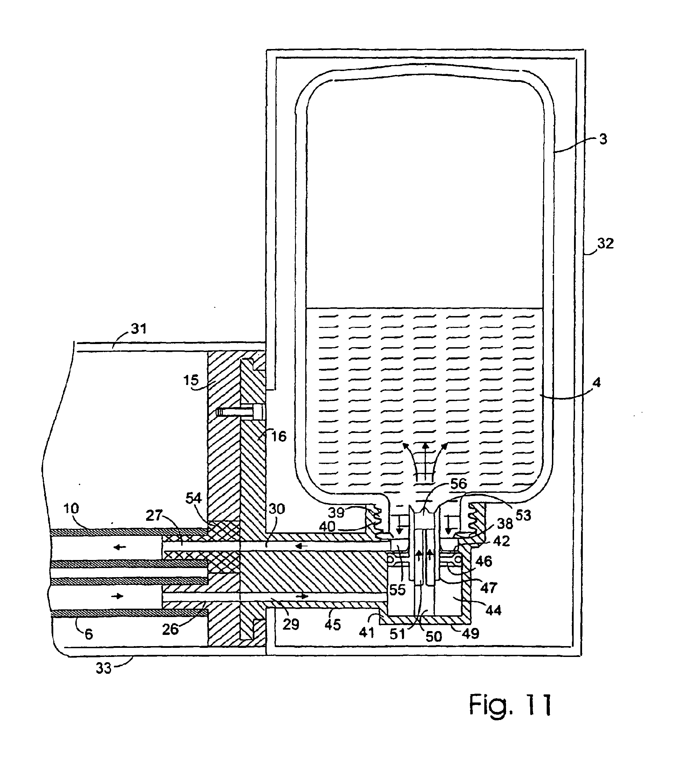

Diese Situation ist in Fig. 11 gezeigt. Der Kompressor leitet jetzt, wie von den Pfeilen gezeigt, über die Leitung 6, den ersten Kanal 26, den zweiten Kanal 29, die untere Kammer44, die Rillen 50 des Zapfens 49 und den Durchströmungskanal 56 des rohrförmigen Kolbens 45 Druckluft in Form eines aufwärts gerichteten Luftstrahls in die Flasche 3.

Die Druckluft treibt dadurch das Dichtmittel aus der Flasche 3 und über die obere Kammer 43, den fünften Kanal 30, den zweiten Kanal 27 und die Leitung 10 in den undicht gewordenen Reifen.

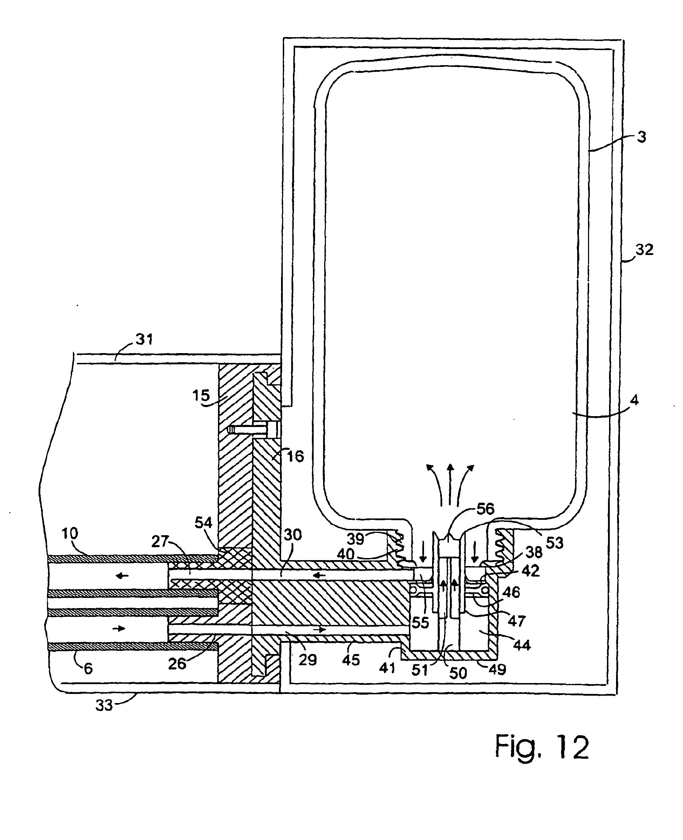

In Fig. 12 ist der gesamte Inhalt der Flasche an Dichtmittel jetzt in den Reifen getrieben worden, wobei die Strömung des Dichtmittels durch eine Strömung von Druckluft ersetzt wird, die den Reifen füllt, bis der gewünschte Reifendruck erreicht ist.

Danach wird der Schlauch 10 von dem Aufpumpventil 11 des Reifens 9 entfernt, wonach der Autofahrer eine angemessene Strecke fährt, um durch die Umdrehung des undicht gewordenen Reifens das Dichtmittel über die ganze Innenseite des Reifens zu verteilen, so dass es auch mit Sicherheit zu dem Loch oder den Löchern des Reifens gelangt und es/sie abdichtet.

Schließlich wird das Gerät in die erste Position zurückgedreht, in der es sehr wenig Platz aufnimmt und folglich bequem beispielsweise im Kofferraum des Autos liegen kann.

Wenn das Gerät zum Abdichten von Löchern eines undicht gewordenen Reifens verwendet worden ist, werden in größerem oder kleinerem Ausmaß an den dabei vom Dichtmittel passierten Teilen Reste des Dichtmittels vorhanden sein. Um das Gerät erneut in einen voll einsatzbereiten Zustand zu bringen, müssen diese Teile durch neue Teile und die Flasche durch eine neue, versiegelte, mit Dichtmittel gefüllte Flasche ersetzt werden.

In der in Fig. 9 bis 12 gezeigten Ausführungsform des erfindungsgemäßen Gerätes sind der Pneumatikzylinder 41, das Zwischenstück 45 und das zweite Ventilteil 16 des Ventils 14 einteilig hergestellt, d.h. als ein einzelnes Bauteil, das in der oben beschriebenen einfachen Weise mit dem ersten Ventilteil 15 des Drehventils zusammengebaut ist. Nach Gebrauch lässt sich dieses Bauteil deshalb gemeinsam mit der leeren Flasche schnell und leicht von dem ersten Ventilteil 15 trennen und durch ein neues Bauteil mit neuer Flasche ersetzen.

Der zweite Kanal 27 des ersten Ventilteils 15 wird auch mit Dichtmittel zugesetzt sein und ist deshalb in einem Einsatz 54 ausgebildet, der in dem ersten Ventilteil 15 lösbar montiert ist und sich folglich gemeinsam mit der Leitung 10 leicht aus diesem entfernen lässt, um durch einen neuen Einsatz 54 und eine neue Leitung 10 ersetzt zu werden.

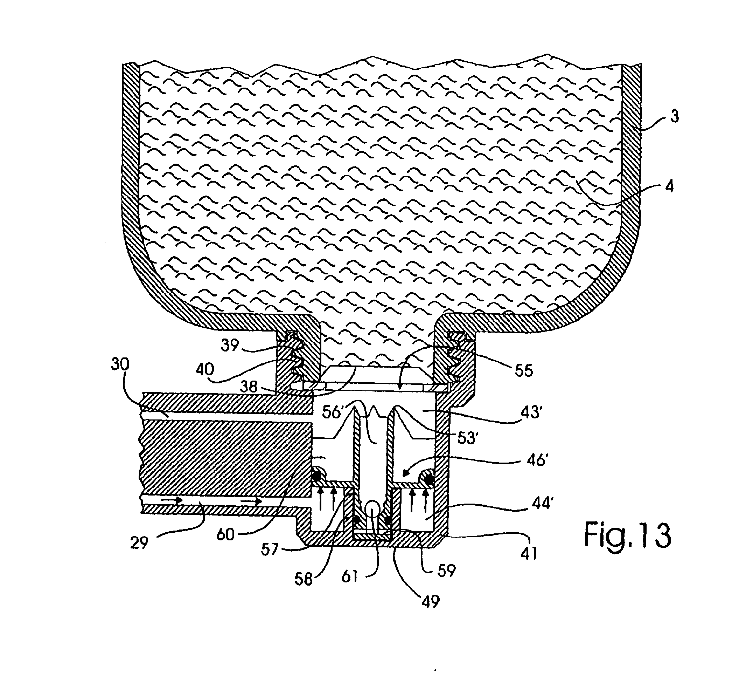

Fig. 13, 14 und 15 zeigen einen Teil des Gerätes mit einer geänderten Ausgestaltung des in Fig. 10, 11 und 12 gezeigten Pneumatikzylinders 41 und Kolbens 46. Gleiche Teile sind mit denselben Bezugszeichen benannt, während entsprechende, aber geänderte Teile mit Bezugszeichen benannt sind, die lediglich durch Apostrophe verändert sind.

Im übrigen funktioniert das Gerät in derselben Weise wie mit Hinweis zu Fig. 10, 11 und 12 beschrieben, wo sich das Umschaltventil in zweiter Position befindet, und das Gerät im Falle einer Reifenpanne zum Abdichten und Aufpumpen des Reifen verwendet wird.

Der Kolben 46' weist Führungseinrichtungen 60 zur Führung des Kolbens an der Innenwand des Pneumatikzylinders 41 auf. In diesem Fall sind die Führungseinrichtungen als sich in Längsrichtung des Kolben erstreckende Stege 60 ausgebildet.

Der Kolben 46' weist außerdem einen axialen Durchströmungskanal 56' und an seiner Unterseite einen nach unten vorspringenden Zapfen 57 sowie in seinem unteren Bereich Bohrungen 59 auf.

Ausserdem ist innerhalb des Durchströmungskanals 56' ein in Fließrichtung auf den Behälter 3 öffnendes Rückschlagventil 61 angeordnet, um zu verhindern, dass Dichtmittel 4 im Behälter 3 über die untere Kammer44, den vierten Kanal 29 und die Leitung 6 zum Kompressor 2 gelangt.

Weiterhin ist in dem Pneumatikzylinder 41 eine Hülse 58 vorhanden, in der der Zapfen 57 geführt wird, bis die Perforiervorrichtung 52 des Kolbens 46' sich bei Gebrauch in einem Bereich innerhalb der Versiegelung 38 befindet.

Fig. 13 zeigt, mit dem Ventil in seiner zweiten Position, die Ausgangsposition für das Abdichten und Aufpumpen eines Reifens, der eine Reifenpanne hat. Der Kolben befindet sich in seiner unteren Position, wo die Hülse 58 die Bohrungen 59 des Zapfens 57 versperrt.

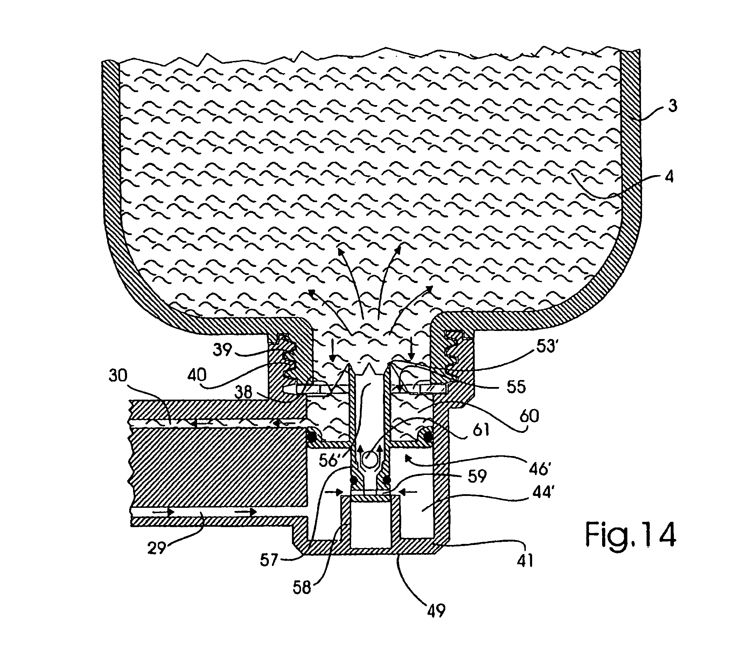

In Fig. 14 wird Druckluft von dem Kompressor 2 über den vierten Kanal 29 in die untere Kammer 44 zugeführt, wobei der Differenzdruck über die Trennwand 42 den Kolben in seine obere Position treibt.

Die Perforiervorrichtung 52 des Kolbens hat in dieser oberen Position die Versiegelung 38 durchbrochen, und gleichzeitig gibt die Hülse 58 die Bohrungen 59 des Zapfens 57 frei, so dass Druckluft über die Bohrungen 59 und den axialen Durchströmungskanal 56' in die Flasche 3 eingeleitet wird.

Dabei treibt die Druckluft das Dichtmittel 4 aus der Flasche und über den fünften Kanal 30 in den undicht gewordenen Reifen, bis die Flasche leer ist.

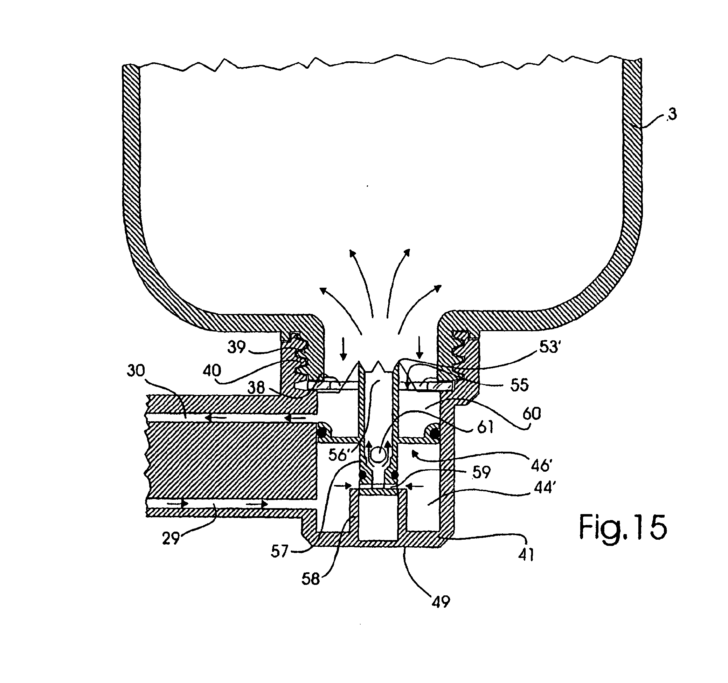

Diese Situation ist in Fig. 15 dargestellt, wo Druckluft zum Aufblasen des Reifens diesem über die nun leere Flasche zugeleitet wird.

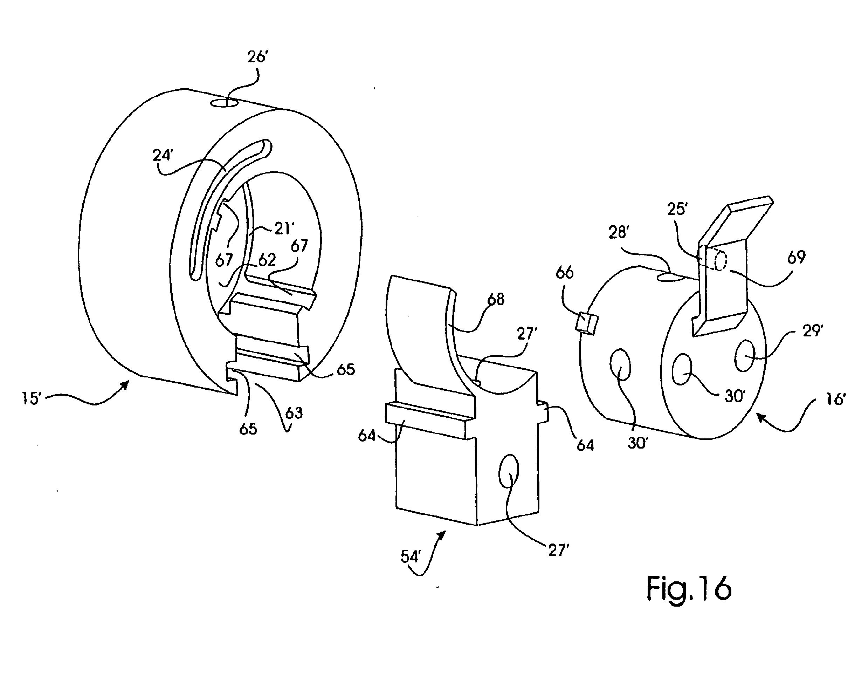

Fig. 16 zeigt in zerlegtem Zustand eine andere Ausgestaltung des in Fig. 3, 4, 9, 10, 11 und 12 gezeigten Umschaltventils. Gleiche Teile sind mit denselben Bezugszeichen benannt, während entsprechende, aber geänderte Teile mit Bezugszeichen benannt sind, die lediglich durch Apostrophe verändert sind.

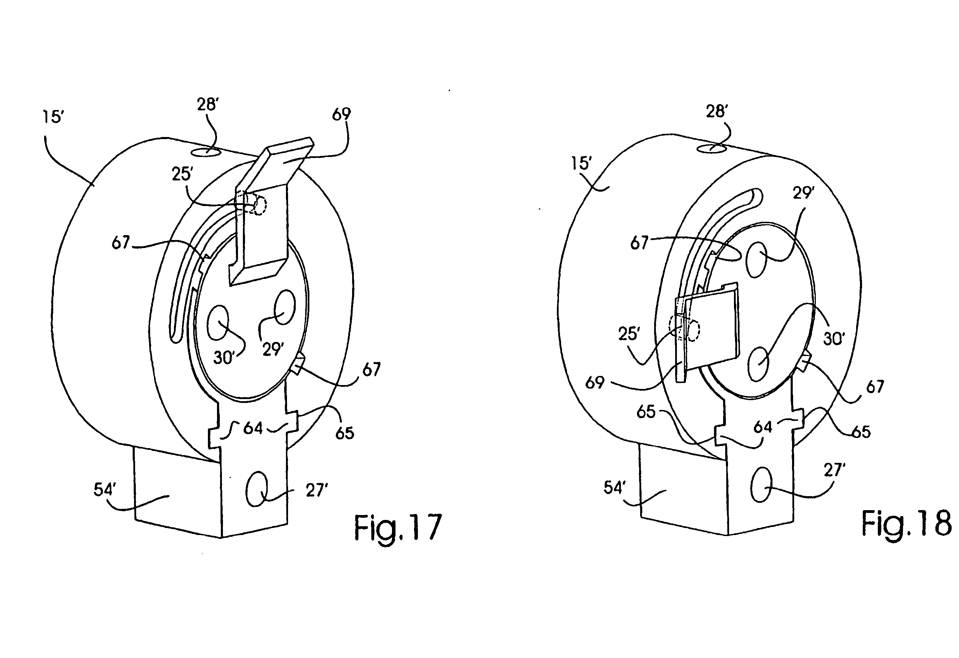

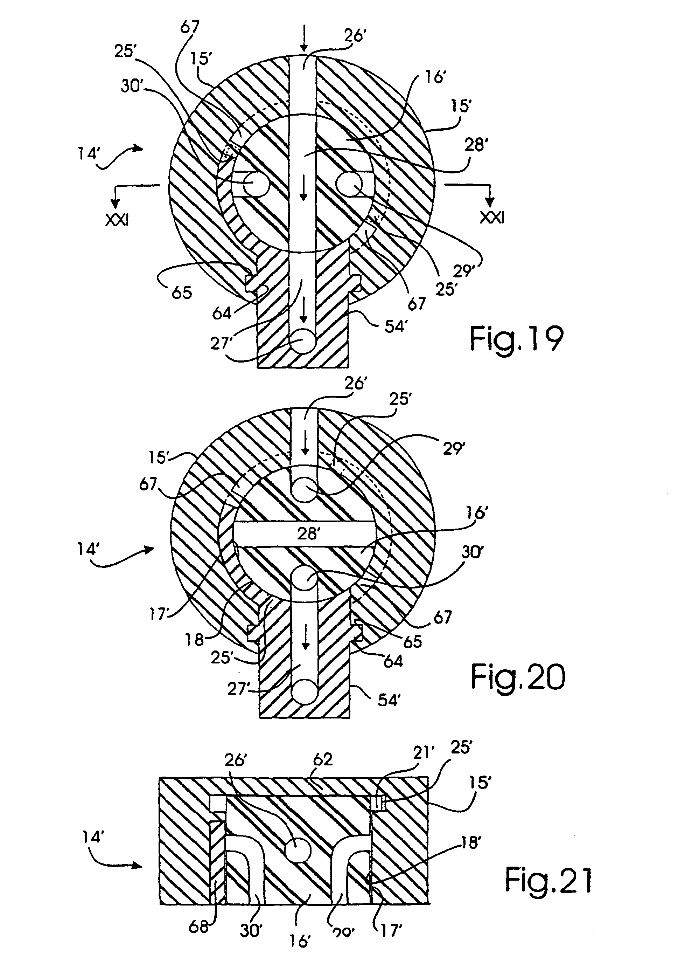

Fig. 17 und 19 zeigen in Endansicht bzw. Querschnitt das Umschaltventil in zusammengebautem Zustand mit dem Umschaltventil in seiner ersten Position, und Fig. 18 und 20 zeigen in Endansicht bzw. Querschnitt das Umschaltventil in zusammengebautem Zustand mit dem Umschaltventil in seiner zweiten Position, während Fig. 21 das in Fig. 19 gezeigte zusammengebaute Umschaltventil in einem anderen Querschnitt rechtwinklig zum ersten Querschnitt zeigt.

Das Umschaltventil ist ein Drehventil 14' mit einem ersten und zweiten Ventilteil 15',16' und einem Einsatzteil 54', einzusetzen in das erste Ventilteil. Diese Ventilteile 15', 16', 54' entsprechen den Ventilteilen 15, 16 und dem Einsatzteil 54 der ersten Ausgestaltung.

Die Ventilteile 15' und 16' sind mit einander gegenüberliegenden und zylinderförmigen Gleitflächen 17' und 18' ausgeformt. Die Gleitfläche 17' befindet sich auf dem Ventilteil 15' bzw. auf dem Einsatzteil 54' des ersten Ventilteils.

Außerdem ist das Drehventil 14' mit einem ersten Satz Kanäle 26', 27' im ersten Ventilteil 15',54' und einem zweiten Satz Kanäle 28',29',30' im zweiten Ventilteil 16' ausgestattet.

In der in Fig. 17, 19 und 21 gezeigten ersten Winkelposition des Drehventils 14' kommunizieren der erste Kanal 26' und der zweite Kanal 27' des ersten Ventilteils 15',54' untereinander über den dritten Kanal 28' des zweiten Ventilteils 16'. So wie in der ersten Ausgestaltung funktioniert die zweite Ausgestaltung des Gerätes in dieser ersten Position allein als Pumpe zum Aufpumpen eines Reifens, der Luft verloren hat.

In der in Fig. 18 und 20 gezeigten zweiten Winkelposition des Drehventils 14' kommunizieren der erste Kanal 26' und der zweite Kanal 27' des ersten Ventilteils 15',54' untereinander über den vierten Kanal 29', den Behälter 3 und den fünften Kanal 30'. So wie in der ersten Ausgestaltung funktioniert die zweite Ausgestaltung des Gerätes in dieser zweiten Position zum Abdichten und nachfolgenden Aufpumpen eines undicht gewordenen Reifens.

Die nähere Konstruktion der zweiter Ausgestaltung des Drehventils 14' ergibt sich aus der nachfolgenden Beschreibung.

Das erste Ventilteil 15' ist als zylindrische Hülse ausgebildet und ist mit einem Boden 62 versehen. Die Hülsenwandung weist eine Aussparung 63 zur Aufnahme des komplementär zu dieser Aussparung ausgebildeten Einsatzteils 54' auf, das mit zwei herausragenden Spunden 64 versehen ist, die in zwei in der Hülsenwandung ausgesparten Nuten 65 passen.

Das zweite Ventilteil 16' ist im zylinderförmig und komplementär zum Hülseninnenraum des ersten Ventilteils 15',54' ausgebildet und ist imstande, sich in diesem Hülseninnenraum zwischen der ersten und zweiten Winkelposition zu drehen.

Der erste Kanal 26' verläuft radial durch das erste Ventilteil 15'. Der zweite Kanal 27' verläuft innerhalb des Einsatzteils 54' im Bereich der zylindrischen Hülse radial und zum objektseitigen Austritt hin axial in Bezug zur zylindrischen Hülse. Der dritte Kanal 28' durchläuft radial und zentrisch das zweite Ventilteil 16'. Und der vierte Kanal 29' und der fünfte Kanal 30' weisen jeweils stirnseitige und umfangsseitige Ausmündungen im zweiten Ventilteil 16' auf.

Um den zweiten Ventilteil 16' drehbar in der korrekten Position im ersten Ventilteil 15' zu halten, ist in der Hülsenwandung an ihrer inneren Peripherie entlang eine ringförmige Nut 21' ausgespart (Fig. 21), und das zweite zylinderförmige Ventilteil 16' ist mit zwei Vorsprüngen 66 versehen und drehbar in diese Nut 21' und in die Hülse über quer zu den Nuten 21' in der Hülsenwandung ausgesparte Nuten 67 eingeschoben. Außerdem ist das Einsatzteil 54' mit einer bogenförmigen Fahne 68 versehen, die in die Hülsenwandung des ersten Ventilteils eingelassen ist.

Wenn das Gerät zum Abdichten und Aufpumpen eines undicht gewordenen Reifens verwendet worden ist, müssen die Teile, die mit dem Dichtungsmittel in Berührung waren, danach ausgetauscht werden, hierunter das zweite Ventilteil 16' und das Einsatzteil 54',

Die periphere Mündung des fünften Kanals 30, der mit Dichtungsmittel durchströmt war, wird aber nur entlang der Fahne des Einsatzteils 54' bewegt, wenn das zweite Ventilteil 16' von der Gebrauchsposition zur Trennungsposition gedreht wird.

Das erste Ventilteil 15' gelangt auf dieses Weise nicht in Berührung mit dem Dichtungsmittel und wird deshalb nicht ausgetauscht.

Die beiden Ventilteile 15',16' sind mit die erste und zweite Position des Drehventils 24' definierenden Anschlägen 24',25' versehen, wobei die Anschläge aus den Enden eines koaxial ausgebildeten Schlitzes 24' im ersten Ventilteil 15' und einem Zapfen 25' bestehen, der an einem Steg 69 des zweiten Ventilteils 16' befestigt ist und sich in den Schlitz 24' erstreckt.

Die Anschläge 24' und 25' sind in solcher Weise beschaffen, dass der Winkel zwischen der ersten und zweiten Position des Umschaltventils zwischen 10° und 170°, vorzugsweise zwischen 30° und 140° und insbesondere zwischen 80° und 100° beträgt.

Das erfindungsgemäße Gerät ist eine kleine, handliche Einheit, die sich schnell und leicht bedienen lässt, und die deshalb das von Autofahrern herkömmlicherweise mitgeführte schwere und sperrige Ersatzrad überflüssig macht. Dadurch, dass anstelle das erfindungsgemäße Gerät verwendet wird, können der Platz und die Nutzlast, die das Ersatzrad zuvor in Anspruch genommen hat, jetzt nutzbar gemacht werden.

Das erfindungsgemäße Gerät ist oben beschrieben und auf der Zeichnung unter der Annahme gezeigt, dass es zum Aufpumpen eines Autoreifens, der Luft verloren hat, oder zum Abdichten und Aufpumpen eines undicht gewordenen Autoreifens verwendet würde.

Dieses ist natürlich nur als Beispiel zu verstehen, da das Gerät im Rahmen der Erfindung ebenso gut dafür verwendet werden kann, die gleichen Vorgänge an anderen Reifen oder anderen aufblasbaren Objekten auszuführen.

## Patentansprüche

1. Gerät zum Abdichten und Aufpumpen eines aufblasbaren Objektes (9), z. B.
eines Reifens (9), das mit einem Aufpumpventil (11) versehen und von einer solchen Art ist, die eine Druckgasquelle (2) und einen Behälter (3) mit einem Dichtmittel (4) umfasst, wobei das Gerät (1) ferner ein Umschaltventil (14) umfasst, das über eine erste Leitung (6) mit der Druckgasquelle (2), über eine zweite Leitung (7) und dritte Leitung (8) mit dem Behälter (3) und über eine vierte Leitung (10) mit dem aufblasbaren Objekt (9) verbindbar ist, wozu das Umschaltventil (14) einen ersten Satz Kanäle (12) und einen zweiten Satz Kanäle (13) aufweist, wobei
- das aufblasbare Objekt (9) über die erste Leitung (6), den ersten Satz Kanäle (12) und die vierte Leitung (10) mit der Druckgasquelle (2) verbunden ist, wenn das Umschaltventil (5) eine erste Position einnimmt
- die Druckgasquelle (2) über die erste Leitung (6), den zweiten Satz Kanäle (13) und die zweite Leitung (7) mit dem Behälter (3) und der Behälter (3) über die dritte Leitung (8), den zweiten Satz Kanäle (13) und die vierte Leitung (10) mit dem aufblasbaren Objekt (9) verbunden ist, wenn das Umschaltventil (5, 14) in einer zweiten Position steht,
wobei das Umschaltventil ein Drehventil (14) ist mit einander gegenüberliegenden Gleitflächen (17; 18) an einem ersten und zweiten Ventilteil (15; 16) mit einem ersten und zweiten Satz Kanälen (26, 27; 28, 29, 30), die in einer ersten gegenseitigen Winkelposition der beiden Ventilteile (15; 16) dafür vorgesehen sind, eine Öffnung durch das Ventil (14) der ersten Verbindung und in einer zweiten Winkelposition eine Öffnung durch das Ventil (14) der zweiten Verbindung zu bilden,
wobei in dem ersten Ventilteil ein erster und ein zweiter Kanal (26, 27) und in dem zweiten Ventilteil ein dritter, vierter und fünfter Kanal (28, 29, 30) ausgebildet sind und in einer solchen Weise in die Gleitflächen (17, 18) ausmünden, dass zusammengehörige Kanäle in den beiden Positionen des Drehventils (14) kommunizieren, wobei der erste, zweite und dritte Kanal (26, 27, 28) eine Öffnung durch das Drehventil (14) der ersten Verbindung bilden, während der erste, zweite, vierte und fünfte Kanal (26, 27, 29, 30) eine Öffnung durch das Drehventil (14) der zweiten Verbindung bilden,
wobei jedes Ventilteil (15, 16) hauptsächlich scheibenförmig ist und dass der erste, zweite, vierte und fünfte Kanal (26, 27, 29, 30) Querkanäle sind, die sich quer durch ihre jeweiligen Ventilteile (15, 16) erstrecken, während der dritte Kanal (28) sich zwischen zwei Ausmündungen in der Gleitfläche (18) des zweiten Ventilteils (16) erstreckt,
**dadurch gekennzeichnet, dass** das erste scheibenförmige Ventilteil (15) an der Peripherie entlang einen von seiner Gleitfläche (17) hervorragenden ringförmigen Bund (21) aufweist, und dass das zweite scheibenförmige Ventilteil (16) drehbar in diesen Bund (21) eingeschoben ist.

2. Gerät nach Anspruch 1, **dadurch gekennzeichnet, dass** in Abstand von der Gleitfläche (17) des Bunds (21) des ersten Ventilteils (15) mindestens ein nach innen gekehrter peripherer Vorsprung (22) ausgebildet ist, und dass an dem zweiten Ventilteil (16) mindestens ein nach außen gekehrter peripherer Vorsprung (23) ausgebildet ist, der in den Zwischenraum zwischen der Gleitfläche des ersten Ventilteils (15) und dem nach innen gekehrten Vorsprung (22) seines Bunds (21) passt, und der einen Ausschnitt aufweist, der sich über eine dem Vorsprung (22) des Bunds (21) entsprechende oder ihn übersteigende Bogenlänge erstreckt.

3. Gerät nach Anspruch 1 oder 2, **dadurch gekennzeichnet, dass** die beiden Ventilteile (15; 16) mit die erste und zweite Position des Drehventils (14) definierenden Anschlägen (24; 25) versehen sind.

4. Gerät nach jedem der Ansprüche 1 bis 3, **dadurch gekennzeichnet, dass** die Anschläge aus den Enden eines koaxial ausgebildeten Schlitzes (25) in dem einen Ventilteil (15; 16) und einem Zapfen (25) in Form von beispielsweise einer Schraube bestehen, die an dem anderen Ventilteil (15; 16) befestigt ist und sich in den Schlitz (24) erstreckt.

5. Gerät nach jedem der Ansprüche 1 bis 4, **dadurch gekennzeichnet, dass** der Winkel zwischen der ersten und zweiten Position des Umschaltventils zwischen 10° und 170°, vorzugsweise zwischen 30° und 140° und insbesondere zwischen 80° und 100° beträgt.

6. Gerät nach jedem der Ansprüche 1 bis 5, **dadurch gekennzeichnet, dass** zumindest der zweite Kanal (27) des ersten Ventilteils (15) in einem in diesem Ventilteil (15) lösbar montierten Einsatz (54) ausgebildet ist.

7. Gerät zum Abdichten und Aufpumpen eines aufblasbaren Objekts (9), z.B. eines Reifens (9), das mit einem Aufpumpventil (11) versehen und von einer solchen Art ist, die eine Druckgasquelle (2) und einen Behälter (3) mit einem Dichtmittel (4) umfasst, wobei das Gerät (1) ferner ein Umschaltventil (14) umfasst, das über eine erste Leitung (6) mit der Druckgasquelle (2), über eine zweite Leitung (7) und dritte Leitung (8) mit dem Behälter (3) und über eine vierte Leitung (10) mit dem aufblasbaren Objekt (9) verbindbar ist, wozu das Umschaltventil (14) einen ersten Satz Kanäle (12) und einen zweiten Satz Kanäle (13) aufweist, wobei
- das aufblasbare Objekt (9) über die erste Leitung (6), den ersten Satz Kanäle (12) und die vierte Leitung (10) mit der Druckgasquelle (2) verbunden ist, wenn das Umschaltventil (5) eine erste Position einnimmt
- die Druckgasquelle (2) über die erste Leitung (6), den zweiten Satz Kanäle (13) und die zweite Leitung (7) mit dem Behälter (3) und der Behälter (3) über die dritte Leitung (8), den zweiten Satz Kanäle (13) und die vierte Leitung (10) mit dem aufblasbaren Objekt (9) verbunden ist, wenn das Umschaltventil (5, 14) in einer zweiten Position steht,
**dadurch gekennzeichnet, dass** das Umschaltventil ein Drehventil (14') mit einander gegenüberliegenden Gleitflächen (17`, 18`) an einem ersten - und zweiten Ventilteil (15', 16`) und einem Einsatzteil (54`) mit einem ersten und zweiten Satz Kanäle (26', 27', 28', 29', 30') ist, die in einer ersten gegenseitigen Winkelposition der drei Ventilteile (15', 16', 54') dafür vorgesehen sind, eine Öffnung durch das Ventil (14') der ersten Verbindung und in einer zweiten Winkelposition eine Öffnung durch das Ventil (14') der zweiten Verbindung zu bilden, in dem die Kanäle (26', 27', 28', 29', 30') in einer solchen Weise in die Gleitflächen (17', 18') kommunizieren, dass zusammengehörige Kanäle in den beiden Positionen des Drehventils (14') kommunizieren.

8. Gerät nach Anspruch 7, **dadurch gekennzeichnet, dass** in dem ersten Ventilteil (15') und dem zugehörigen Einsatzteil (54') ein erster und zweiter Kanal (26', 27') und in dem zweiten Ventilteil (16') ein dritter, vierter und fünfter Kanal (28', 29', 30') ausgebildet sind, wobei der erste, zweite und dritte Kanal (26', 27', 28') eine Öffnung durch das Drehventil (14') der ersten Verbindung bilden, während der erste, zweite, vierte und fünfte Kanal (26', 27', 29', 30') eine Öffnung durch das Drehventil (24) der zweiten Verbindung bilden.

9. Gerät nach Anspruch 7 oder 8, **dadurch gekennzeichnet, dass** das erste Ventilteil (15') als zylindrische Hülse ausgebildet ist, vorzugsweise mit einem Boden (62) versehen, dass das Ventilteil (15') in der Hülsenwandung eine Aussparung (63) zur Aufnahme des im wesentlichen komplementär zur Aussparung (63) ausgebildeten Einsatzteils (54') aufweist, dass das zweite Ventilteil (16') im wesentlichen zylinderförmig und komplementär zum Hülseninnenraum des ersten Ventilteils (15') ausgebildet ist.

10. Gerät nach Anspruch 7, 8 oder 9, **dadurch gekennzeichnet, dass**
- der erste Kanal (26') radial durch das als zylindrische Hülse ausgebildete erste Ventilteil (15') verläuft,
- der zweite Kanal (27') innerhalb des Einsatzteils (54') im Bereich der zylindrischen Hülse radial und zum objektseitigen Austritt hin axial in Bezug zur zylindrischen Hülse verläuft,
- der dritte Kanal (28') radial und zentrisch das zweite Ventilteil (16') durchläuft, und
- der vierte Kanal (29') und der fünfte Kanal (30') jeweils stirnseitige und umfangsseitige Ausmündungen im zweiten Ventilteil (16') aufweisen.

11. Gerät nach jedem der Ansprüche 7 bis 10, **dadurch gekennzeichnet, dass** das erste hülsenförmige Ventil (15') an seiner inneren Peripherie entlang eine in seiner Gleitfläche (17') ausgesparte ringförmige Nut (21') aufweist, und dass das zweite zylinderförmige Ventilteil (16') mit Vorsprüngen (66) drehbar in die ringförmige Nut (21') und in die Hülse eingeschoben ist.

12. Gerät nach jedem der Ansprüche 7 bis 11, **dadurch gekennzeichnet, dass** die beiden Ventilteile (15', 16') mit die erste und zweite Position des Drehventils (14') definierenden Anschlägen (24', 25') versehen sind.

13. Gerät nach jedem der Ansprüche 7 bis 12, **dadurch gekennzeichnet, dass** die Anschläge aus den Enden eines koaxial ausgebildeten Schlitzes (24') in dem einen Ventilteil (15', 16') und einem Zapfen (25') bestehen, der an dem anderen Ventilteil (15', 16') befestigt ist und sich in den Schlitz (24') erstreckt.

14. Gerät nach jedem der Ansprüche 7 bis 13, **dadurch gekennzeichnet, dass** der Winkel zwischen der ersten und zweiten Position des Umschaltventils zwischen 10° und 170°, vorzugsweise zwischen 30° und 140° und insbesondere zwischen 80° und 100° beträgt.

15. Gerät nach jedem der Ansprüche 1 bis 14, **dadurch gekennzeichnet, dass** das Gerät (1) einen Pneumatikzylinder (41) mit einem Boden (49) an dem einen Ende und einer Öffnung (55) an dem anderen Ende und einen in Richtung auf die Öffnung (55) verschiebbaren Kolben (46) umfasst, dass der Behälter (3) mit einer Versiegelung (38) zum hermetischen Verschließen des Behälters (3) versehen ist, dass dieser an dem Pneumatikzylinder (41) an dessen Öffnung (55) montiert ist, die dabei von der Versiegelung (38) gedeckt wird, dass der Kolben (46) sich eng durch eine Trennwand (42) erstreckt, die den Pneumatikzylinder (41) in eine der Versiegelung (38) nächstgelegene, mit dem fünften Kanal (30) in Verbindung stehende erste Kammer (43) und eine auf der anderen Seite der Trennwand (42) gelegene, in Verbindung mit dem vierten Kanal (29) stehende zweite Kammer (44) aufteilt, dass der Kolben (46) bei Gebrauch aus einer Ausgangsposition, in der sein der Versiegelung (38) des Behälters (3) zugekehrtes Endteil sich außerhalb der Versiegelung (38) befindet, in eine Endposition verschoben wird, in der das Endteil sich innerhalb der Versiegelung (38) befindet, dass der Kolben (46) einen axialen Durchströmungskanal (56) aufweist, und dass in dem Pneumatikzylinder (41) ein Zapfen (50) vorhanden ist, der diesen Kanal (56) ausfüllt, bis das genannte Endteil sich bei Gebrauch zumindest in einem Bereich innerhalb der Versiegelung (38) befindet.

16. Gerät nach jedem der Ansprüche 1 bis 15, **dadurch gekennzeichnet, dass** das Gerät (1) einen Pneumatikzylinder (41) mit einem Boden (49) an dem einen Ende und einer Öffnung (55) an dem anderen Ende und einen in Richtung auf die Öffnung (55) verschiebbaren Kolben (46') umfasst, dass der Behälter (3) mit einer Versiegelung (38) zum hermetischen Verschließen des Behälters (3) versehen ist, dass dieser an dem Pneumatikzylinder (41) an dessen Öffnung (55) montiert ist, die dabei von der Versiegelung (38) abgedeckt wird, wobei der Kolben den Pneumatikzylinder in eine der Versiegelung (38) nächstgelegene, mit dem fünften Kanal (30) in Verbindung stehende erste Kammer (43) und eine Verbindung mit dem vierten Kanal (39) stehende zweite Kammer (44) aufteilt, dass der Kolben (46') bei Gebrauch aus einer Ausgangsposition, in der sein der Versiegelung (38) des Behälters (3) zugekehrtes Endteil sich außerhalb der Versiegelung (38) befindet, in eine Endposition verschoben wird, in der die Perforiervorrichtung (52) des Endteils sich innerhalb der Versiegelung (38) befindet, dass der Kolben (46') einen axialen Durchströmungskanal (56') aufweist, dass der Kolben (46') weiterhin an seiner Unterseite einen nach unten vorspringenden Zapfen (57) aufweist, und dass in dem Pneumatikzylinder (41) eine Hülse (58) vorhanden ist, in der der Zapfen (57) geführt wird bis das genannte Endteil sich bei Gebrauch zumindest in einem Bereich innerhalb der Versiegelung (38) befindet, wobei innerhalb des Durchströmungskanals (56') ein in Fließrichtung auf den Behälter (3) öffnendes Rückschlagventil (61) angeordnet ist und der Zapfen in seinem unteren Bereich Bohrungen (59) aufweist, die den Durchströmungskanal mit der zweiten Kammer (44) verbinden, wenn sich der genannte Endteil bei Gebrauch innerhalb der Versiegelung (38) befindet.

17. Gerät nach Anspruch 15 oder 16, **dadurch gekennzeichnet, dass** der Kolben (46') Führungseinrichtungen (60) zur Führung des Kolbens (46') an den Innenwänden des Pneumatikzylinders (41) aufweist, vorzugsweise ausgebildet als in Längsrichtung des Kolbens sich erstreckende Stege.

18. Gerät nach Anspruch 15, 16 oder 17, **dadurch gekennzeichnet, dass** das Endteil des Kolbens (46) als eine Perforiervorrichtung (52) mit mindestens einem Messer und/oder einer Spitze (53) ausgebildet ist.

19. Gerät nach jedem der Ansprüche 15 bis 18, **dadurch gekennzeichnet, dass** der Pneumatikzylinder (41) über ein Zwischenstück (45) mit Kanälen, die eine Verlängerung des vierten und fünften Kanals (29, 30) bilden, mit dem zweiten Ventilteil (16) lösbar verbunden ist.

20. Gerät nach jedem der Ansprüche 1 bis 19, **dadurch gekennzeichnet, dass** die Druckgasquelle in einem ersten Gehäuse (31) und der Behälter (3) in einem zweiten Gehäuse (32) untergebracht ist, das über das Drehventil (14) mit dem ersten Gehäuse drehbar verbunden ist.

21. Gerät nach Anspruch 20, **dadurch gekennzeichnet, dass** jedes Gehäuse (31:32) von zwoi vorzugsweise parallelen Soltonwänden (33;34), die sich hauptsächlich In die gleiche Richtung orstrokken wie die Drehachse (19) des Drohventils (14), zwei Querwänden (35;36), die sich zwischen den Seitenwänden (33;34) erstrecken, und zwei vorzugsweise parallolon Stirnwänden, die sich quer zu der Drehachse (19) erstrecken, abgegrenzt wird, und dass zumindest die Seltenwände (33;34) der Gehäuse (31;32) sich In der ersten Position dos Drehventils (14) hauptsächlich In Verlägerung voneinander erstrecken.

22. Gerät nach Anspruch 20 oder 21, **dadurch gekennzeichnet, dass** zumindest die eine Querwand (35;36) In Jedem Gehäuse (31;32) sich hauptsächlich an einer Zylinderfläche entlang erstreckt, deren Achse (19) mit der des Drehventlis (14) identisch ist.

23. Gerät nach einem der Ansprüche 1 bis 22, **dadurch gekennzeichnet, dass** das Gerät (1) former ein erstes Gehäuse (31) für die Druckgasquelle (2) und ein zweites Gehäuse (32) für den Behälter (3) umfasst, und dass die beiden Gehäuse (31, 32) über das Drehventil (14) drehbar miteinanderverbunden sind.

24. Gerät nach Anspruch 23, **dadurch gekennzeichnet, dass** die beiden Gehäuse (31;32) beide eine Seite (33;34) aufweisen, die bei ausschließlicher Verwondungdes Gerätes (1) als Pumpe dazu dlont, es auf einer Unterlage aufzustützen, und dass die Stützselte (33) des ersten Gehäuses (31) zum Aufstützen des Gerätes (1) auf einer Unteriage dient, wenn es alternativ zum Abdichten und Aufpumpen eines undicht gewordenen Objekts (9) verwendet wird, während die Stützselte (34) des zweite Ge-häuses (32) dabei winklig zur Stützselte (33) das ersten Gehäuses (31) gedreht ist.

25. Verfahren zum Aufpumpen von beispielsweise einem Reifen (9) anhand des Gerätes (1) nach Anspruch 1 bis 16, **dadurch gekennzeichnet, dass** das Verfahren folgende Vorfahrensschritte umfasst,
- dass das Umschaltventil (5) In die erste Position gestollt wird,
- dass eine mit dem zweiten Kanal (27) des ersten Ventiltells (15) verbundono Leitung (10) lösbar an das Aufpumpventil (11) des Reifens angeschlossen wird,
- dass die Druckgasquelle (2) aktiviert wird, und
- dass die Druckgasquelle (2) inaktiviert wird,
wenn der Reifen aufgepumpt worden Ist.

26. Verfahren zum Filcken von beispielsweise einem undicht gewerdenen Reifen (9) anhand des Gerätes (1) nach Anspruch 1 bis 16, **dadurch gekennzeichnet, dass** das Verfahren folgende Verfahrensschritto umfasst,
- dass das Umschaltventil (5) In die zweite Posltion gestellt wird,
- dass eine mit dem zweiten Kanal (27) dos ersten Ventiltells (15) verbundene Loltung (10) lösbar an das Aufpumpventil (11) des Reifens (9) angeschlossen wird,
- dass die Druckgasquelle (2) aktiviert wird, und
- dass die Druckgasquelle (2) inaktiviert wird, wenn der Reifen (9) aufgepumpt worden ist.

## Claims

1. Device for sealing and inflating an inflatable object (9), for example a tyre (9), which is provided with an inflation valve (11) and is such that it comprises a compressed-gas source (2) and a container (3) containing a sealing agent (4), wherein the device (1) furthermore comprises a reversing valve (14) which can be connected to the compressed-gas source (2) by way of a first line (6), to the container (3) by way of a second line (7) and third line (8), and to the inflatable object (9) by way of a fourth line (10), for the purpose of which the reversing valve (14) has a first set of channels (12) and a second set of channnels (13),
- the inflatable object (9) being connected to the compressed-gas source (2) by way of the first line (6), the first set of channels (12) and the fourth line (10) when the reversing valve (5) assumes a first position,
- the compressed-gas source (2) being connected to the container (3) by way of the first line (6), the second set of channels (13) and the second line (7), and the container (3) being connected to the inflatable object (9) by way of the third line (8), the second set of channels (13) and the fourth line (10), when the reversing valve (5, 14) is in a second position, wherein the reversing valve is a rotary valve (14) having mutually opposing sliding faces (17; 18) on a first and second valve part (15; 16) with a first and second set of channels (26, 27; 28, 29, 30) which, in a first mutual angular position of the two valve parts (15; 16), are provided to form an opening through the valve (14) in the first connection and, in a second angular position, to form an opening through the valve (14) in the second connection, wherein a first and a second channel (26, 27) are constructed in the first valve part and a third, fourth and fifth channel (28, 29, 30) are constructed in the second valve part and lead into the sliding faces (17, 18) in such a way that connected channels communicate in the two positions of the rotary valve (14), the first, second and third channels (26, 27, 28) forming an opening through the rotary valve (14) in the first connection whilst the first, second, fourth and fifth channels (26, 27, 29, 30) form an opening through the rotary valve (14) in the second connection, wherein each valve part (15, 16) is principally disc-shaped and the first, second, fourth and fifth channels (26, 27, 29, 30) are transverse channels which extend transversely through their respective valve parts (15, 16) whilst the third channel (28) extends between two outlets in the sliding face (18) of the second valve part (16), **characterised in that** the first disc-shaped valve part (15) has, along the periphery, an annular collar (21) projecting from its sliding face (17) and **in that** the second disc-shaped valve part (16) is rotatably inserted into this collar (21) .

2. Device according to Claim 1, **characterised in that** at least one inwardly directed peripheral projection (22) is constructed at a spacing from the sliding face (17) of the collar (21) of the first valve part (15) and **in that** at least one outwardly directed peripheral projection (23) is constructed on the second valve part (16), said latter projection (23) fitting in the space between the sliding face of the first valve part (15) and the inwardly directed projection (22) of its collar (21) and having a cutout which extends over a curve length corresponding to, or exceeding, the projection (22) of the collar (21).

3. Device according to Claim 1 or 2, **characterised in that** the two valve parts (15; 16) are provided with stops (24; 25) defining the first and second position of the rotary valve (14).

4. Device according to each of Claims 1 to 3, **characterised in that** the stops comprise the ends of a coaxially constructed slot (24) in one of the valve parts (15; 16) and a pin (25), for example in the form of a screw, which is fixed to the other valve part (15; 16) and extends in the slot (24).

5. Device according to each of Claims 1 to 4, **characterised in that** the angle between the first and second position of the reversing valve is between 10° and 170°, preferably between 30° and 140° and particularly between 80° and 100°.

6. Device according to each of Claims 1 to 5, **characterised in that** at least the second channel (27) of the first valve part (15) is constructed in an insert (54) detachably mounted in this valve part (15).

7. Device for sealing and inflating an inflatable object (9), for example a tyre (9), which is provided with an inflation valve (11) and is such that it comprises a compressed-gas source (2) and a container (3) containing a sealing agent (4), wherein the device (1) furthermore comprises a reversing valve (14) which can be connected to the compressed-gas source (2) by way of a first line (6), to the container (3) by way of a second line (7) and third line (8), and to the inflatable object (9) by way of a fourth line (10), for the purpose of which the reversing valve (14) has a first set of channels (12) and a second set of channnels (13),
- the inflatable object (9) being connected to the compressed-gas source (2) by way of the first line (6), the first set of channels (12) and the fourth line (10) when the reversing valve (5) assumes a first position,
- the compressed-gas source (2) being connected to the container (3) by way of the first line (6), the second set of channels (13) and the second line (7), and the container (3) being connected to the inflatable object (9) by way of the third line (8), the second set of channels (13) and the fourth line (10), when the reversing valve (5, 14) is in a second position,
**characterised in that** the reversing valve is rotary valve (14') having mutually opposing sliding faces (17', 18') on a first and second valve part (15', 16') and an insert part (54') having a first and second set of channels (26', 27', 28', 29', 30') which, in a first mutual angular position of the three valve parts (15', 16', 54'), are provided to form an opening through the valve (14') in the first connection and, in a second angular position, to form an opening through the valve (14') in the second connection, with the channels (26', 27', 28', 29', 30') communicating in the sliding faces (17', 18') in such a way that connected channels communicate in the two positions of the rotary valve (14').

8. Device according to Claim 7, **characterised in that** a first and second channel (26', 27') are constructed in the first valve part (15') and the associated insert part (54') and a third, fourth and fifth channel (28', 29', 30') are constructed in the second valve part (16'), the first, second and third channels (26', 27' 28') forming an opening through the rotary valve (14') in the first connection whilst the first, second, fourth and fifth channels (26', 27', 29', 30') form an opening through the rotary valve (24) in the second connection.

9. Device according to Claim 7 or 8, **characterised in that** the first valve part (15') is constructed as a cylindrical sleeve, preferably provided with a base (62), **in that** the valve part (15') has a cutout (63) in the sleeve wall for recieving the insert part (54') constructed substantially complementarily to the cutout (63), and **in that** the second valve part (16') is constructed to be substantially cylindrical and complementary to the sleeve interior of the first valve part (15').

10. Device according to Claim 7, 8 or 9,
**characterised in that**
- the first channel (26') extends radially through the first valve part (15') constructed as a cylindrical sleeve
- the second channel (27') extends radially inside the insert part (54') in the region of the cylindrical sleeve and axially in relation to the cylindrical sleeve towards th exit on the object side
- the third channel (28') passes radially and centrically through the second valve part (16'), and
- the fourth channel (29') and the fifth channel (30') each have respective outlets in the end face and the circumference of the second valve part (16').

11. Device according to each of Claims 7 to 10, **characterised in that** the first sleeve-shaped valve (15') has, along its inner periphery, an annular groove (21') cut in its sliding face (17') and **in that** the second cylindrical valve part (16') is rotatably inserted into the annular groove (21') and the sleeve by means of projections (66).

12. Device according to each of Claims 7 to 11, **characterised in that** the two valve parts (15', 16') are provided with stops (24', 25') definining the first and second position of the rotary valve (14').

13. Device according to each of Claims 7 to 12, **characterised in that** the stops comprise the ends of a coaxially constructed slot (24') in one of the valve parts (15', 16') and a pin (25) which is fixed to the other valve part (15', 16') and extends in the slot (24').

14. Device according to each of Claims 7 to 13, **characterised in that** the angle between the first and second position of the reversing valve is between 10° and 170°, preferably between 30° and 140° and particularly between 80° and 100°.

15. Device according to each of Claims 1 to 14, **characterised in that** the device (1) comprises a pneumatic cylinder (41) having a base (49) at one end and an opening (55) at the other end and a piston (46) which is displaceable in the direction of the opening (55), **in that** the container (3) is provided with a seal (38) for hermetically sealing the container (3), **in that** this latter is mounted on the pneumatic cylinder (41) at its opening (55) which is thereby covered by the seal (38), **in that** the piston (46) extends tightly through a dividing wall (42) dividing the pneumatic cyliner (41) into a first chamber (43), which is located nearest the seal (38) and is in communication with the fifth channel (30), and a second chamber (44) which is located on the other side of the dividing wall (42) and is in communication with the fourth channel (29), **in that** the piston (46) is displaced upon use from a starting position, in which its end part facing the seal (38) of the container (3) is located outside the seal (38), into a final position in which the end part is located inside the seal (38), **in that** the piston (46) has an axial through-flow channel (56), and **in that** there is a pin (50) in the pneumatic cylinder (41), which fills this channel (56) until the said end part is located at least in a region inside the seal (38) upon use.

16. Device according to each of Claims 1 to 15, charaterised in that the device (1) comprises a pneumatic cylinder (41) having a base (49) at one end and an opening (55) at the other end and a piston (46') which is displaceable in the direction of the opening (55), in that the container (3) is provided with a seal (38) for hermetically sealing the container (3), in that this latter is mounted on the pneumatic cylinder (41) at its opening (44) which is thereby covered by the seal (38), the piston dividing the pneumatic cylinder into a first chamber (43), which is located nearest the seal (38) and is in communication with the fifth channel (30), and a second chamber (44) which is in communication with the fourth channel (39), in that the piston (46') is displaced upon use from its starting position, in which its end part facing the seal (38) of the container (3) is located outside the seal (38), into a final position in which the perforating device (52) of the end part is located inside the seal (38), in that the piston (46') has an axial through-flow channel (56'), in that the piston (46') furthermore has a downwardly projecting pin (57) on its underside, and in that there is a sleeve (58) in the pneumatice cylinder (41), in which the pin (57) is guided until the said end part is located at least in a region inside the seal (38) upon use, a non-return valve (61) which opens in the flow direction towards the container (3) being arranged inside the through-flow channel (56') and the pin having bores (59) in its lower region which connect the through-flow channel to the second chamber (44) when the said end part is located inside the seal (38) upon use.

17. Device according to Claim 15 or 16, **characterised in that** the piston (46') has guide devices (60) for guiding the piston (46') along the inside walls of the pneumatic cylinder (41), preferably constructed as webs extending in the longitudinal direction of the piston.

18. Device according to Claim 15, 16 or 17, **characterised in that** the end part of the piston (46) is constructed as a perforating device (52) having at least one blade and/or point (53).

19. Device according to each of Claims 15 to 18, **characterised in that** the pneumatic cylinder (41) is detachably connected to the second valve part (16) by way of an intermediate piece (45) having channels which form an extension of the fourth and fifth channels (29, 30).

20. Device according to each of Claims 1 to 19, **characterised in that** the compressed-gas source is accommodated in a first housing (31) and the container (3) is accommodated in a second housing (32) which is rotatably connected to the first housing by way of the rotary valve (14).

21. Device according to Claim 20, **characterised in that** each housing (31; 32) is delimited by two preferably parallel side walls (33; 34) which extend principally in the same direction as the axis of rotation of the rotary valve (14), two transverse walls (35; 36) which extend between the side walls (33; 34) and two preferably parallel end walls which extend transversely to the axis of rotation (19), and **in that** at least the side walls (33; 34) of the housing (31; 32) extend principally as an extension of one another in the first position of the rotary valve (14).

22. Device according to Claim 20 or 21, **characterised in that** at least the one transverse wall (35; 36) in each housing (31; 32) extends principally along a cylindrical face whereof the axis (19) is identical to that of the rotary valve (14).

23. Device according to one of Claims 1 to 22, **characterised in that** the device (1) furthermore comprises a first housing (31) for the compressed-gas source (2) and a second housing (32) for the container (3) and **in that** the two housings (31, 32) are rotatably connected to one another by way of the rotary valve (14).

24. Device according to Claim 23, **characterised in that** the two housings (31; 32) both have one side (33; 34) which, when the device (1) is used solely as a pump, serves to support it on a base and **in that** the supporting side (33) of the first housing (31) serves to support the device (1) on a base when it is used alternatively for sealing and inflating an object (9) which has generated a leak, whilst the supporting side (34) of the second housing (32) is rotated at an angle to the supporting side (33) of the first housing (31).

25. Process for inflating a tyre (9), for example, using the device (1) according to Claims 1 to 16, **characterised in that** the process comprises the following steps,
- the reversing valve (5) is set in the first position,
- a line (10) connected to the second channel (27) of the first valve part (15) is detachably connected to the inflation valve (11) of the tyre,
- the compressed-gas source (2) is activated and
- the compressed-gas source (2) is deactivated when the tyre has been inflated.

26. Process for plugging a tyre (9), for example, with a leak using the device (1) according to Claims 1 to 16, **characterised in that** the process comprises the following process steps,
- the reversing valve (5) is set in the second position,
- a line (10) connected to the second channel (27) of the first valve part (15) is detachably connected to the inflation valve (11) of the tyre (9),
- the compressed-gas source (2) is activated and
- the compressed-gas source (2) is deactivated when the tyre has been inflated.

## Revendications

1. Appareil pour étanchéifier et gonfler un objet gonflable (9), par exemple un pneumatique (9), qui est pourvu d'une valve de gonflage (11) et qui est d'un type contenant une source de gaz comprimé (2) et un récipient (3) comportant un milieu d'étanchéité (4),
l'appareil (1) comportant en outre une soupape de commutation (14) qui peut être reliée par l'intermédiaire d'une première canalisation (6) à la source de gaz comprimé (2), par l'intermédiaire d'une deuxième canalisation (7) et d'une troisième canalisation (8) au récipient (3) et par l'intermédiaire d'une quatrième canalisation (10) à l'objet gonflable (9), la soupape de commutation (14) possédant à cet effet un premier ensemble de canaux (12) et un deuxième ensemble de canaux (13),
- l'objet gonflable (9) étant relié par l'intermédiaire de la première canalisation (6) du premier ensemble de canaux (12) et de la quatrième canalisation (10) à la source de gaz comprimé (2) lorsque la soupape de commutation (5) prend une première position,
- la source de gaz comprimé (2) étant reliée par l'intermédiaire de la première canalisation (6), du deuxième ensemble de canaux (13) et de la deuxième canalisation (7) au récipient (3) et le récipient (3) étant relié par l'intermédiaire de la troisième canalisation (8), du deuxième ensemble de canaux (13) et de la quatrième canalisation (10) à l'objet gonflable (9) lorsque la soupape de commutation (5, 14) est dans une deuxième position,
la soupape de commutation étant une soupape rotative (14) comportant des surfaces de glissement (17; 18) qui sont opposées l'une à l'autre et sont situées sur le premier et le deuxième élément de soupape (15; 16) avec un premier et un deuxième ensemble de canaux (26, 27; 28, 29, 30) prévus dans la première position angulaire réciproque des deux éléments de soupape (15; 16) de manière à former une ouverture à travers la soupape (14) de la première liaison, et dans une deuxième position angulaire, une ouverture à travers la soupape (14) de la deuxième liaison,
un premier et un deuxième canal (26, 27) étant formés dans le premier élément de soupape et un troisième, un quatrième et un cinquième canal (28, 29, 30) étant formés dans le deuxième élément de soupape, et débouchent dans les surfaces de glissement (17; 18) de telle sorte que des canaux associés communiquent dans les deux positions de la soupape rotative (14),le premier, le deuxième et le troisième canal (26, 27, 28) formant une ouverture à travers la soupape rotative (14) de la première liaison, tandis que le premier, le deuxième, le quatrième et le cinquième canal (26, 27, 29, 30) forment une ouverture à travers la soupape rotative (14) de la deuxième liaison,
chaque élément de soupape (15; 16) étant réalisé essentiellement en forme de disque et le premier, le deuxième, le quatrième et le cinquième canal (26, 27; 29, 30) étant des canaux transversaux qui s'étendent transversalement dans leurs éléments de soupape respectifs (15; 16) tandis que le troisième canal (28) s'étend entre deux sorties dans la surface de glissement (18) du deuxième élément de soupape (16), **caractérisé en ce que**
le premier élément de soupape en forme de disque (15) comporte sur sa périphérie un collet de forme annulaire (21) qui fait saillie sur sa surface de glissement (17) et
**en ce que** le deuxième élément de soupape en forme de disque (16) est inséré de manière à pouvoir tourner dans ce collet (21).

2. Appareil selon la revendication 1, **caractérisé en ce qu'**au moins une partie saillante périphérique (22) tournée vers l'intérieur est formée à distance de la surface de glissement (17) du collet (21) du premier élément de soupape (15) et **en ce que** sur le deuxième élément de soupape (16) est formée au moins une partie saillante périphérique (23) tournée vers l'extérieur, qui s'adapte dans l'espace intercalaire présent entre la surface de glissement du premier élément de soupape (15) et la partie saillante (22), tournée vers l'intérieur, de son collet (21) et qui possède une découpe qui s'étend sur une longueur d'arc qui correspond à la partie saillante (22) du collet (21) ou s'étend au-delà de cette partie saillante.

3. Appareil selon chacune des revendications 1 et 2, **caractérisé en ce que** les deux éléments de soupape (15; 16) sont équipés de butées (24; 25) qui définissent la première et la deuxième position de la soupape rotative (14).

4. Appareil selon chacune des revendications 1 à 3, **caractérisé en ce que** les butées sont constituées par les extrémités d'une fente disposée coaxialement (25) dans un élément de soupape (15; 16) et par un embout (25) par exemple en forme de vis fixée sur l'autre élément de soupape (15; 16) et s'étendant dans la fente (24).

5. Appareil selon chacune des revendications 1 à 4, **caractérisé en ce que** l'angle entre la première et la deuxième position de la soupape de commutation est compris entre 10° et 170°, de préférence entre 30° et 140° et notamment entre 80° et 100°.

6. Appareil selon chacune des revendications 1 à 5, **caractérisé en ce qu'**au moins le deuxième canal (27) du premier élément de soupape (15) est formé dans un insert (54) monté de façon amovible dans cet élément de soupape (15).

7. Appareil pour étanchéifier et gonfler un objet gonflable (9), par exemple un pneumatique (9), qui est pourvu d'une valve de gonflage (11) et qui est d'un type contenant une source de gaz comprimé (2) et un récipient (3) comportant un milieu d'étanchéité (4),
l'appareil (1) comportant en outre une soupape de commutation (14) qui peut être reliée par l'intermédiaire d'une première canalisation (6) à la source de gaz comprimé (2), par l'intermédiaire d'une deuxième canalisation (7) et d'une troisième canalisation (8) au récipient (3) et par l'intermédiaire d'une quatrième canalisation (10) à l'objet gonflable (9), la soupape de commutation (14) possédant à cet effet un premier ensemble de canaux (12) et un deuxième ensemble de canaux (13),
- l'objet gonflable (9) étant relié par l'intermédiaire de la première canalisation (6) du premier ensemble de canaux (12) et de la quatrième canalisation (10) à la source de gaz comprimé (2) lorsque la soupape de commutation (5) prend une première position,
- la source de gaz comprimé (2) étant reliée par l'intermédiaire de la première canalisation (6), du deuxième ensemble de canaux (13) et de la deuxième canalisation (7) au récipient (3) et le récipient (3) étant relié par l'intermédiaire de la troisième canalisation (8), du deuxième ensemble de canaux (13) et de la quatrième canalisation (10) à l'objet gonflable (9) lorsque la soupape de commutation (5, 14) est dans une deuxième position,
**caractérisé en ce que** la soupape de commutation est une soupape rotative (14') comportant des surfaces de glissement (17', 18') qui se font face et sont situées sur des premier et deuxième éléments de soupape (15', 16') et un élément d'insertion (54') comportant des premier et deuxième ensembles de canaux (26', 27', 28', 29', 30'), qui, dans une première position angulaire réciproque des trois éléments de soupape (15', 16', 54') sont prévus pour former une ouverture à travers la soupape (14') de la première liaison et, dans une deuxième position angulaire, former une ouverture à travers la soupape (14') de la deuxième liaison, par le fait que les canaux (26', 27'; 28', 29', 30') communiquent dans les surfaces de glissement (17', 18') de telle sorte que les canaux associés communiquent lorsque la soupape rotative (14') est dans ses deux positions.

8. Appareil selon la revendication 7, **caractérisé en ce qu'**un premier et un deuxième canal (26', 27') sont formés dans le premier élément de soupape (15') et dans l'élément d'insertion associé (54') et **en ce que** le troisième, le quatrième et le cinquième canal (28', 29', 30') sont formés dans le deuxième élément de soupape (16'), le premier, le deuxième et le troisième canal (26', 27', 28') formant une ouverture à travers la soupape rotative (14') de la première liaison tandis que le premier, le deuxième, le quatrième et le cinquième canal (26', 27', 29', 30') forment une ouverture à travers la soupape rotative (24) de la deuxième liaison.

9. Appareil selon la revendication 7 ou 8, **caractérisé en ce que** le premier élément de soupape (15') est agencé sous la forme d'une douille cylindrique et est pourvu de préférence d'un fond (62), **en ce que** l'élément de soupape (15') comporte dans la paroi de la douille un évidement (63) pour loger l'élément d'insertion (54') agencé de manière à être sensiblement complémentaire de l'évidement (63) et **en ce que** le deuxième élément de soupape (16') est prévu en forme essentiellement cylindrique et complémentaire de l'espace intérieur de la douille du premier élément de soupape (15').

10. Appareil selon la revendication 7, 8 ou 9, **caractérisé en ce que**
- le premier canal (26') s'étend radialement à travers le premier élément de soupape (15') agencé sous la forme d'une douille cylindrique,
- le deuxième canal (27') à l'intérieur de l'élément d'insertion (54') s'étend radialement au niveau de la douille cylindrique et axialement par rapport à la douille cylindrique en direction de la sortie côté objet,
- le troisième canal (28') traverse radialement et d'une manière centrée le deuxième élément de soupape (16'), et
- la quatrième canal (29') et le cinquième canal (30') possèdent chacun des sorties frontales et périphériques dans le deuxième élément de soupape (16') .

11. Appareil selon chacune des revendications 7 à 10, **caractérisé en ce que** la première soupape en forme de douille (15') comporte le long de sa périphérie intérieure une gorge annulaire (21') formée dans la surface de glissement (17') de cette soupape et **en ce que** le deuxième élément de soupape de forme cylindrique (16') qui présente des parties saillantes (66) est inséré dans la gorge annulaire (21') et dans la douille de manière à pouvoir y tourner.

12. Appareil selon chacune des revendications 7 à 11, **caractérisé en ce que** les deux éléments de soupape (15', 16') comportent des butées (24', 25') qui définissent la première et la deuxième position de la soupape rotative (14').

13. Appareil selon chacune des revendications 7 à 12, **caractérisé en ce que** les butées sont constituées par les extrémités d'une fente (24') disposée coaxialement dans un élément de soupape (15', 16') et par un embout (25') qui est fixé sur l'autre élément de soupape (15', 16') et qui s'étend dans la fente (24').

14. Appareil selon chacune des revendications 7 à 13, **caractérisé en ce que** l'angle entre la première et la deuxième position de la soupape de commutation est compris entre 10° et 170°, de préférence entre 30° et 140° et notamment entre 80° et 100°.

15. Appareil selon chacune des revendications 1 à 14, **caractérisé en ce que** l'appareil (1) comporte un vérin pneumatique (41) comportant un fond (49) sur une extrémité, une ouverture (55) sur l'autre extrémité et un piston (46) déplaçable en direction de l'ouverture (55), **en ce que** le récipient (3) est pourvu d'un élément de scellement (38) pour réaliser la fermeture hermétique du récipient (3), **en ce que** ce dernier est monté sur le vérin pneumatique (41) au niveau de son ouverture (55) recouverte par l'élément de scellement (38) , **en ce que** le piston (46) traverse à l'état serré une paroi de séparation (42) qui divise le vérin pneumatique (41) en une première chambre (43) qui est la plus proche de l'élément de scellement (38) et est reliée au cinquième canal (30) et en une deuxième chambre (44) qui est située de l'autre côté de la paroi de séparation (42) et est reliée au quatrième canal (29), **en ce qu'**en utilisation, le piston (46) est déplacé depuis une position de départ dans laquelle sa partie d'extrémité qui est tournée vers l'élément de scellement (38) du récipient (3) est située à l'extérieur de l'élément de scellement (38), pour venir dans une position d'extrémité dans laquelle la partie d'extrémité est située à l'intérieur de l'élément de scellement (38) , **en ce que** le piston (46) est traversé par un canal axial (56) et **en ce qu'**un embout (50) qui remplit ce canal (56) jusqu'à ce que ladite partie d'extrémité se situe en cours d'utilisation au moins dans une zone à l'intérieur de l'élément de scellement (38) est prévu dans le vérin pneumatique (41).

16. Appareil selon chacune des revendications 1 à 15, **caractérisé en ce que** l'appareil (1) comporte un vérin pneumatique (41) comportant un fond (49) sur une extrémité et une ouverture (55) sur l'autre extrémité et un piston (46') déplaçable en direction de l'ouverture (55), **en ce que** le récipient (3) est pourvu d'un élément de scellement (38) pour réaliser la fermeture hermétique de récipient (3), **en ce que** ce dernier est monté sur le vérin pneumatique (41) au niveau de son ouverture (55) de ce dernier recouverte par l'élément de scellement (38) et tournée vers l'élément de scellement (38) du récipient (3), **en ce que** le piston divise le vérin pneumatique en une première chambre (43) qui est la plus proche de l'élément de scellement (38) et est reliée au cinquième canal (30) et en une deuxième chambre (44) qui est reliée au quatrième canal (39), **en ce qu'**en utilisation, le piston (46') est déplacé depuis une position de départ dans laquelle le dispositif de perforation (52) de sa partie d'extrémité est situé à l'extérieur de l'élément de scellement (38) pour venir dans une position d'extrémité dans laquelle le dispositif de perforation (52) de la partie d'extrémité est situé dans l'élément de scellement (38), **en ce que** le piston (46') est traversé par un canal axial (56'), **en ce que** le piston (46') possède dans le prolongement de son côté inférieur un embout (57) en saillie vers le bas et **en ce qu'**une douille (58) dans laquelle l'embout (57) est guidé jusqu'à ce que ladite partie d'extrémité se situe en utilisation au moins dans une zone à l'intérieur de l'élément de scellement (38) est prévue dans le vérin pneumatique (41), une soupape anti-retour (61) qui s'ouvre dans la direction de circulation en direction du récipient (3) étant disposée à l'intérieur du canal de traversée (56') et l'embout comportant dans sa partie inférieure des perforations (59) qui relient le canal de traversée à la deuxième chambre (44) lorsque ladite partie d'extrémité est située en utilisation à l'intérieur de l'élément de scellement (38) .

17. Appareil selon les revendications 15 ou 16, **caractérisé en ce que** le piston (46') comporte des dispositifs de guidage (60) servant à guider le piston (46') sur les parois intérieures du vérin pneumatique (41) et configurés de préférence sous la forme de barrettes qui s'étendent dans la direction longitudinale du piston.

18. Appareil selon les revendications 15, 16 ou 17, **caractérisé en ce que** la partie d'extrémité du piston (46) est agencée sous la forme d'un dispositif de perforation (52) comprenant au moins un couteau et/ou une pointe (53).

19. Appareil selon chacune des revendications 15 à 18, **caractérisé en ce que** le vérin pneumatique (41) est relié de façon amovible au deuxième élément de soupape (16) par l'intermédiaire d'un élément intercalaire (45) comportant des canaux qui forment un prolongement du quatrième et du cinquième canal (29, 30).

20. Appareil selon chacune des revendications 1 à 19, **caractérisé en ce que** la source de gaz comprimé est logée dans un premier boîtier (31) et **en ce que** le récipient (3) est logé dans un deuxième boîtier (32) relié au premier boîtier de manière pouvoir tourner au moyen de la soupape rotative (14).

21. Appareil selon la revendication 20, **caractérisé en ce que** chaque boîtier (31; 32) est délimité par deux parois latérales (33; 34) de préférence parallèles qui s'étendent principalement dans la même direction que l'axe de rotation (19) de la soupape rotative (14), par deux parois transversales (35; 36) qui s'étendent entre les parois latérales (33; 34) et par deux parois frontales de préférence parallèles qui s'étendent transversalement par rapport à l'axe de rotation (19) et **en ce qu'**au moins les parois latérales (33; 34) des boîtiers (31; 32) s'étendent principalement dans le prolongement l'une de l'autre lorsque la soupape rotative (14) est dans la première position.

22. Appareil selon les revendications 20 ou 21, **caractérisé en ce qu'**au moins une paroi transversale (35; 36) dans chaque boîtier (31; 32) s'étend principalement le long d'une surface cylindrique, dont l'axe (19) coïncide avec celui de la soupape rotative (14) .

23. Appareil selon chacune des revendications 1 à 22, **caractérisé en ce que** l'appareil (1) comporte en outre un premier boîtier (31) pour la source de gaz comprimé (2) et un deuxième boîtier (32) pour le récipient (3) et **en ce que** les deux boîtiers (31, 32) sont reliés entre eux de manière à pouvoir tourner au moyen de la soupape rotative (14).

24. Appareil selon la revendication 23, **caractérisé en ce que** les deux boîtiers (31; 32) possèdent tous deux un côté (33; 34) qui sert à prendre appui sur un support lorsque l'appareil (1) est utilisé exclusivement en tant que pompe et **en ce que** le côté d'appui (33) du premier boîtier (31) sert à supporter l'appareil (1) sur un support lorsque l'appareil est utilisé pour étanchéifier et gonfler un objet (9) devenu non étanche, le côté d'appui (34) du deuxième boîtier (32) étant pivoté angulairement par apport au côté d'appui (33) du premier boîtier (31).

25. Procédé pour gonfler par exemple un pneumatique (9) à l'aide de l'appareil (1) selon les revendications 1 à 16, **caractérisé en ce que** le procédé comprend les étapes de procédé suivantes qui consistent à
- placer la soupape de commutation (5) dans la première position,
- raccorder de façon amovible une canalisation (10) reliée au deuxième canal (27) du premier élément de soupape (15) à la valve de gonflage (11) du pneumatique,
- activer la source de gaz comprimé (2, et
- désactiver la source de gaz comprimé (2) lorsque le pneumatique a été gonflé.

26. Procédé pour réparer par exemple un pneumatique (9) devenu non étanche, à l'aide de l'appareil (1) selon les revendications 1 à 16, **caractérisé en ce que** le procédé comprend les étapes de procédé suivantes qui consistent à
- placer la soupape de commutation (5) dans la deuxième position,
- raccorder de façon amovible une canalisation (10) reliée au deuxième canal (27) du premier élément de soupape (15) à la valve de gonflage (11) du pneumatique (9),
- activer la source de gaz comprimé (2) et
- désactiver la source de gaz comprimé (2) lorsque le pneumatique (9) a été gonflé.
